# EUROPEAN PATENT SPECIFICATION

(11) **EP 2 527 183 B1**
(45) Date of publication and mention of the grant of the patent: **15.08.2018**
(21) Application number: 10843869.8
(22) Date of filing: 21.01.2010
(51) Int. Cl.: B60L 7/24, B60T 8/17, B60T 13/58, B60T 13/66, B60L 15/20

(54) **BRAKE CONTROL DEVICE AND BRAKE CONTROL METHOD**
BREMSSTEUERUNGSVORRICHTUNG UND BREMSSTEUERUNGSVERFAHREN
DISPOSITIF DE COMMANDE DE FREIN ET PROCÉDÉ DE COMMANDE DE FREIN

(43) Date of publication of application: 28.11.2012
(73) Proprietor: Mitsubishi Electric Corporation, Tokyo 100-8310 (JP)
(72) Inventor: MATSUYAMA Etsuji, Tokyo 100-8310 (JP); ITANO Yasuharu, Tokyo 100-8310 (JP); YAMADA Hiroshi, Tokyo 100-8310 (JP)
(74) Representative: Sajda, Wolf E.
(86) International application number: PCT/JP2010/050733
(87) International publication number: WO 2011/089703

(56) References cited:
- EP-A2- 0 152 300
- JP-A- 60 098 801
- JP-A- 2001 314 001
- JP-A- 2002 064 906
- JP-A- 2005 261 113

## Description

### Technical Field

The present invention relates to a brake control device and brake control method for a train employing both electric brakes and air brakes.

### Background Art

A friction brake device is used on trains to apply a brake force to various axles on the train via friction. The friction brake device generates the brake force by pressing a brake shoe against a disc or drum mounted on a wheel or axle. A brake device that uses compressed air to drive a brake cylinder for pressing the brake shoe is called an air brake device. An air brake device supplies air to or exhausts air from the brake cylinder by magnetizing or demagnetizing electromagnetic control valves. Braking using an air brake device is called an air brake.

Document EP 0 152 300 A2 discloses: A brake control device, comprising: - a necessary brake force acquisition unit (see page 7, line 5-12) adapted to acquire a necessary brake force necessary for each car or flatcar of a train containing a motor car holding a primary electric motor; - an electric brake force detection unit (feed-back signals from dynamic brakes A and B, see p. 7,1. 23-24) adapted to detect an electric brake force of an entire composition of the train; - a brake force adjustment unit (p. 7,1. 25-26) adapted to distribute air brake force so as to compensate for fluctuations in the electric brake force with the air brake force of one of the cars or flatcars, in the action period of one deceleration of the train or from running to stopping; and - a control unit (44) adapted to control the air brake force of each car or flatcar in accordance with a value distributed by the brake force adjustment unit.

Trains that run on electric motors include motor cars and trailer cars. Motor cars are equipped with electric motors and are self-propelled cars. Trailer cars are not equipped with electric motors for running, instead being cars that are pulled by or propelled by motor cars. Motor cars are equipped with air brake devices and electric brake devices that use regenerative braking from the electric motor driving the car. Trailer cars are generally equipped with air brake devices. On electric railways, combined control is accomplished using electric brakes and air brakes. Combined control aims to accomplish brake control by combining electric brakes and air brakes.

With a combined control, electric brake force is distributed with priority as the brake force necessary for motor cars. On trains containing motor cars and trailer cars, surplus electric brake force that exceeds the brake force necessary for the motor cars is distributed with weighting to all trailer cars. On trailer cars, brake force remaining after subtracting from the brake force necessary for the train the weighted distribution of electric brake force in excess of that needed by the motor cars is covered by an air brake (for example, see Patent Literature 1).

Controlling the air brake to supplement the amount by which the electric brake force is insufficient is called air brake supplemental control. Air brake supplemental control supplements the electric brake force using electromagnetic valves for supplying air and electromagnetic valves for exhausting air, by generating necessary air brake force by turning these electromagnetic valves on and off.

### Prior Art Literature

### Patent Literature

Patent Literature 1: Unexamined Japanese Patent Application KOKAI Publication JP-A-H11-8906.

### Disclosure of Invention

### Problems to be Solved by the Invention

In combined control when there are a large number of motor cars and trailer cars composing a train, when there is a surplus of electric brake force, that surplus is distributed with weighting to all trailer cars. Conversely, when the electric brake force on all motor cars is less (insufficient) than the brake force necessary for all motor cars, in the trailer cars the brake force necessary for that car can be covered with the air brakes for each, and in the motor cars, the shortage in electric brake force is distributed with weighting to the air brakes of the motor cars.

However, electric brake devices used in conventional trains are not necessarily able to generate the indicated brake force constantly, and there are fluctuations in the electric brake force. With the above-described method of weighted distribution of surplus or shortages, in order to maintain the brake force at the commanded value by supplementing during fluctuations in the electric brake force, the air brake devices on all trailer cars, or the air brake devices on all motor cars, must have their electromagnetic supply valves and electromagnetic exhaust values operated each time there is a fluctuation in the electric brake force. As a result, the problem arises that the operation frequency of the electromagnetic valves of the air brake device increases and the life thereof is shortened.

In consideration of the foregoing, it is an object of the present invention to provide a brake control device and brake control method that extend life by reducing the operation frequency of electromagnetic valves in an air brake device.

### Means for Solving the Problems

The above mentioned problems are solved by providing a brake control device according to claim 1 and by providing a brake control method according to claim 8. Preferred embodiments are defined in the dependent claims.

A brake control device according to a first aspect of the present invention acquires, by means of a necessary brake force acquisition unit, the necessary brake force necessary for each car or flatcar in a train containing a motor car, and detects, by means of an electric brake force detection unit, an electric brake force of the entire composition of the train.

A brake force adjustment unit distributes the air brake force so that fluctuations in the electric brake force are compensated for by the air brake force of one car or flatcar, in an action period of one deceleration of the train or from running to stopping. A control unit controls the air brake of the car or flatcar in accordance with the value distributed by the brake force adjustment unit.

A brake control method according to a second aspect of the present invention acquires, by means of a necessary brake force acquisition step, the necessary brake force necessary for each car or flatcar in a train containing a motor car, and detects, by means of an electric brake force detection step, an electric brake force of the entire composition of the train.

A brake force adjustment step distributes air brake force so that fluctuations in the electric brake force are compensated for by the air brake force of one car or flatcar, in an action period of one deceleration of the train or to running until stopping. A control step controls the air brake of the car or flatcar in accordance with the value distributed in the brake force adjustment step.

### Effects of the Invention

With the brake control device and brake control method for the train of the present invention, it is possible to reduce the operation frequency of electromagnetic supply valves and electromagnetic exhaust valves for braking control of an air brake device, and consequently, it is possible to obtain a brake control device and brake control method that extend a lifetime thereof.

### Brief Description of Drawings

- FIG. 1: is a block diagram showing an exemplary composition in which a brake control device according to a first embodiment of the present invention is applied to a train;
- FIG. 2: is a block diagram showing an exemplary composition of an air brake control device according to the embodiment of the present invention;
- FIG. 3: is a drawing showing the relationship between the speed of the train and the electric brake force and air brake force;
- FIG. 4: is a drawing showing in a bar graph the state at line B-B in FIG. 3;
- FIG. 5: is a drawing showing an overview of the weighted distribution to T cars of the surplus electric brake force according to prior art;
- FIG. 6: is a drawing showing an overview of the weighted distribution to M cars of the shortage of electric brake force according to prior art;
- FIG. 7: is a drawing explaining a method for distributing a surplus of electric brake force according to the first embodiment;
- FIG. 8: is a drawing explaining a method for distributing a shortage of electric brake force according to the first embodiment;
- FIG. 9: is a flowchart showing one example of the action of the train brake force distribution according to the first embodiment;
- FIG. 10: is a flowchart showing one example of the action from a different viewpoint of the train brake force distribution according to the first embodiment;
- FIG. 11: is a flowchart showing one example of the action of the train brake force distribution according to a variation of the first embodiment;
- FIG. 12: is a block diagram showing an exemplary composition in which a brake control device according to a second embodiment of the present invention is applied to a train;
- FIG. 13: is a drawing explaining an example of a change in the order of distributing brake force according to the second embodiment;
- FIG. 14: is a flowchart showing one example of the action of a brake force distribution order change according to the second embodiment;
- FIG. 15: is a drawing explaining a method for distributing a surplus of an electric brake force according to a third embodiment of the present invention;
- FIG. 16: is a drawing explaining a method for distributing a shortage of an electric brake force according to the third embodiment;
- FIG. 17: is a flowchart showing one example of the action of the train brake force distribution according to the third embodiment; and
- FIG. 18: is a block diagram showing an example of the physical composition of a train brake control device according to the embodiments of the present invention.

### Mode for Carrying Out the Invention

### First Embodiment

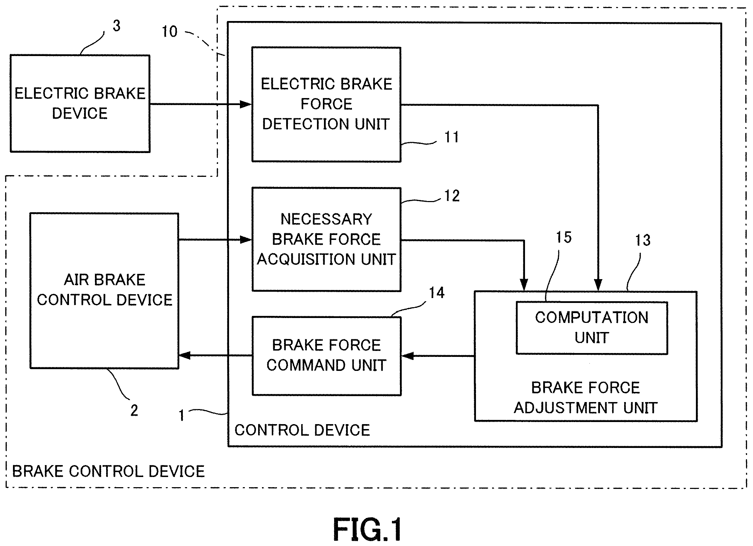

FIG. 1 is a block diagram showing an exemplary composition in which a brake control device according to a first embodiment of the present invention is applied to a train. A brake control device 10 is composed of a control device 1 and an air brake control device 2. The control device 1 communicates with an electric brake device 3 and the air brake control device 2 on each car constituting the train via a network (not represented) among the cars. In FIG. 1, the electric brake device 3 and the air brake control device 2 are each represented as a single block.

The electric brake device 3 is provided on motor cars (hereafter, M cars) of the train, on each car or on each car's flatcar. The air brake control device 2 is provided on the M cars and trailer cars (hereafter, T cars) of the train, on each car or each flatcar.

The electric brake device 3 uses an electric motor on the M cars as a generator, converts the operating energy of the train into electric energy and exercises control by returning the converted electric energy to the power supply side (overhead wires or storage battery, and the like). In this embodiment, the electric brake device 3 may control multiple electric motors of the M cars in bulk or may control multiple electric motors one by one.

The air brake control device 2 controls an air brake device provided on a car's axle. The air brake device generates a brake force by pressing a brake shoe against a disc or drum attached to a wheel or axle, through a brake cylinder driven by compressed air. The air brake control device 2 supplies air to and exhausts air from the brake cylinder by magnetizing or demagnetizing electromagnetic control valves.

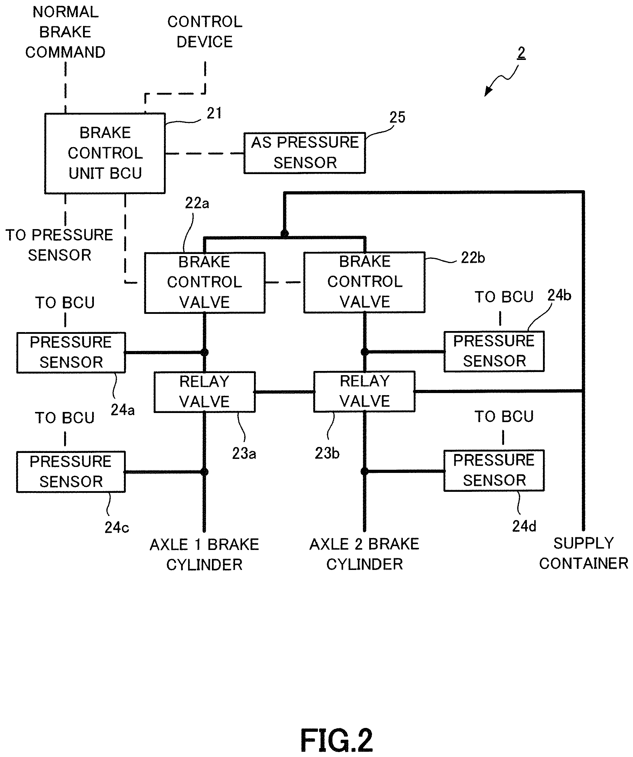

FIG. 2 is a block diagram showing an exemplary composition of an air brake control device according to the first embodiment of the present invention. The air brake control device 2 has a brake control unit (BCU) 21, brake control valves 22a and 22b, relay valves 23a and 23b, pressure sensors 24a, 24b, 24c and 24d, and an AS pressure sensor 25.

In FIG. 2, bold lines indicate compressed air routes. In addition, dashed lines indicate electric signal routes. The air brake control device 2 of FIG. 2 controls brake cylinders of two axles. Compressed air is supplied to the brake cylinders (not represented) from a supply vessel (not represented) via the brake control valves 22a and 22b and the relay valves 23a and 23b.

The brake control valves 22a and 22b are composed of electromagnetic valves that supply air to the relay valves 23a and 23b and electromagnetic valves that exhaust air from the relay valves 23a and 23b. These electromagnetic valves are controlled by the brake control unit 21.

Pressure sensors 24a and 24b are connected to the two relay valves 23a and 23b on the brake control valve 22a and 22b side, respectively, and pressure sensors 24c and 24d are connected to the two relay valves 23a and 23b on the brake cylinder side, and detect pressure on the control side and the supply side to the cylinder.

Each pressure sensor 24a, 24b, 24c and 24d sends detected pressure signals to the brake control unit 21. The brake control unit 21 controls the brake control valves 22a and 22b so that the pressure detected by the pressure sensors 24a, 24b, 24c and 24d becomes pressure corresponding to the ordered brake force.

The relay valves 23a and 23b amplify an air pressure input from the brake control valves 22a and 22b, respectively, and supply this to the brake cylinder. That is to say, the pressure of air supplied to the brake cylinder from the relay valves 23a and 23b is adjusted in proportion to the pressure on the output side of the brake control valves 22a and 22b.

The AS pressure sensor 25 detects air pressure in an air suspension (not represented) of the flatcar and sends this to the brake control unit 21. The air suspension keeps the height of the chassis constant in accordance with the load on the car. The load on that flatcar can be determined by the air pressure of the air suspension.

A regular brake command from the driver's seat is sent to the brake control unit 21. The regular brake command indicates the deceleration of the train. The brake control unit 21 computes the brake force necessary for that car or flatcar (necessary brake force) from the air suspension's air pressure detected by the AS pressure sensor 25 and the regular brake command.

The necessary brake force is theoretically the product of the load on the car (or a value to which the mass under the spring has been added) and the regular brake command (deceleration). In the present invention, the necessary brake force thus commanded is called simply the necessary brake force.

The brake control unit 21 computes the air pressure to be applied to each brake cylinder in accordance with the brake force using a prescribed method, and controls the brake control valves 22a and 22b to achieve this air pressure. The brake control unit 21 sends the necessary brake force for that car or flatcar to the control device 1 of FIG. 1 via a brake network (not represented).

The control device 1 of FIG. 1 is composed of an electric brake force detection unit 11, a necessary brake force acquisition unit 12, a brake force adjustment unit 13 and a brake force command unit 14. The brake force adjustment unit 13 includes a computation unit 15.

What is handled by the control device 1 and the air brake control device 2 is not the brake force itself but rather data or a signal indicating the magnitude of the brake force. In the explanation below, the magnitude or value of the brake force is simply called the brake force in order to avoid complications.

The electric brake force detection unit 11 inputs the value of the electric brake force of each car or each flatcar from the electric brake device 3. Furthermore, this electric brake force is totaled to obtain the magnitude of the electric brake force of the entire composition of the train. The electric brake force detection unit 11 may use any kind of method as long as the electric brake force of the entire composition of the train can be detected.

For example, it would be fine to use a method that finds the electric brake force of the entire composition by detecting the current or voltage regenerated to the power supply side from the train. In the explanation below, the electric brake force of the composition as a whole is called simply the electric brake force.

The necessary brake force acquisition unit 12 inputs the value of the necessary brake force for each car or each flatcar from each air brake control device 2. The necessary brake force acquisition unit 12 inputs the value of the air pressure of the air suspension of each car or flatcar and the regular brake command, and may compute the value of the necessary brake force for each car or flatcar.

The brake force adjustment unit 13 inputs the magnitude of the electric brake force of the entire composition of the train from the electric brake force detection unit 11, and inputs the value of the necessary brake force for each car or flatcar from the necessary brake force acquisition unit 12. Furthermore, the brake force adjustment unit 13 distributes the air brake force that should be generated to each car or flatcar.

When the electric brake force of the entire composition is less than the brake force necessary for the entire composition of the train (the total of the necessary brake forces of each car), the brake force adjustment unit 13 distributes that difference to the electric brake force of the corresponding cars or flatcars in a determined order successively until the difference is eliminated, in amounts of necessary brake force for each car or flatcar of the train or amounts of the maximum brake force in the electric brake device.

The computation unit 15 computes the difference between the total of the necessary brake forces of the M cars and the electric brake force of the entire composition. When the electric brake force of the entire composition is greater than the total of the necessary brake forces of the M cars, the absolute value of that difference is called the electric brake force surplus. When the electric brake force of the entire composition is less than the total of the necessary brake forces of the M cars, the absolute value of that difference is called the electric brake force shortage.

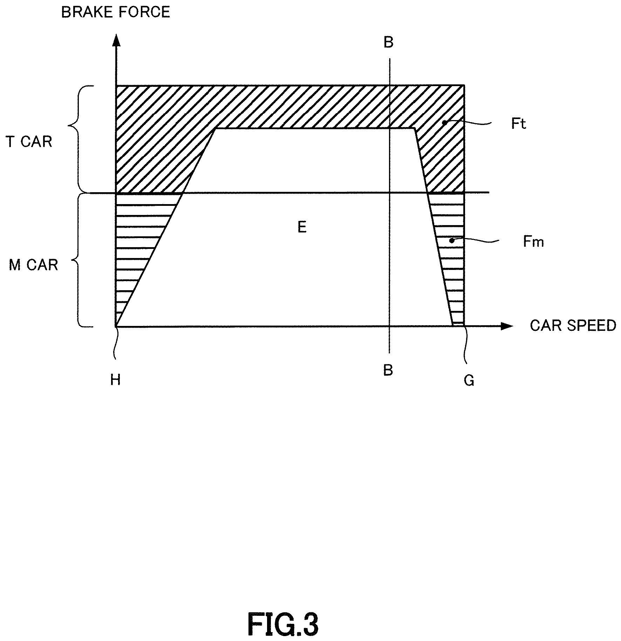

FIG. 3 is a drawing showing the relationship between the speed of the train and the electric brake force and air brake force. The horizontal axis in FIG. 3 represents the speed of the train, with the right direction in the drawing indicating greater speeds. The vertical axis indicates the magnitude of the brake force. The total height of the graph in FIG. 3 indicates the magnitude of the necessary brake force for the train.

Heights below the horizontal line at the boundary between the M cars and the T cars represent the necessary brake forces for the M cars. Heights above the horizontal line at the boundary represent the necessary brake forces for the T cars. The white space in FIG. 3 indicates speed changes of the electric brake force E.

The area shaded with diagonal lines represents the air brake force Ft of the T cars. The area shaded with horizontal lines represents the air brake force Fm of the M cars. The height at a given horizontal position represents the electric brake force E, the M car air brake force Fm and the T car air brake force Ft at the speed at that horizontal position.

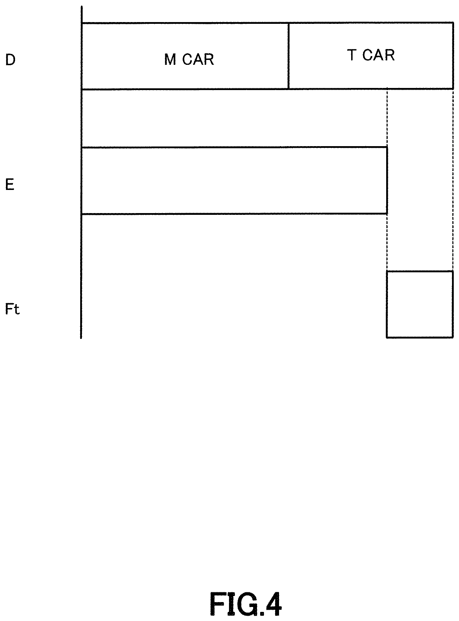

FIG. 4 is a drawing showing in a bar graph the state at line B-B in FIG. 3. In FIG. 4, a state in which a portion of the necessary brake force of the T cars is covered by the surplus of the electric brake force E is represented. In the example of FIG. 4, the difference between the necessary brake force D and the electric brake force E is compensated for by the air brake force Ft of the T cars, and the air braking device of the M cars does not operate.

The surplus air brake force of the M cars is used as a portion of the necessary brake force of the T cars, but in reality it is on the M cars that the electric brake is acting. On the other hand, it is on the various cars (various axles) of the T cars or the T cars and M cars where the air brake acts.

When the train decelerates and stops from a running state, the state moves from the point G where application of the brake is started on the right in FIG. 3 to the left as the speed of the train drops and ultimately arrives at the stop H. At the start of application of the brake, the electric brake does not work and the necessary brake force is entirely covered by the air brake force.

As the electric brake force E becomes greater from the start of operations, the brake force Fm covered by the air brake device of the M cars is reduced. From the point when the electric brake force E exceeds the necessary brake force for the M cars, the air brake force Ft of the T cars is reduced, and a portion of the necessary brake force for the T cars is combined with the surplus of electric brake force.

When the electric brake force further decelerates from the maximum state, the electric brake force E steadily declines and when this falls below the necessary brake force for the M cars, the necessary brake force for the T cars is covered by the air brake force Ft from the T cars. As the electric brake force E becomes smaller than the necessary brake force of the M cars, that shortfall is covered by the air brake force Fm of the M cars. The above is the change in the electric brake force and the air brake force of the train as a whole.

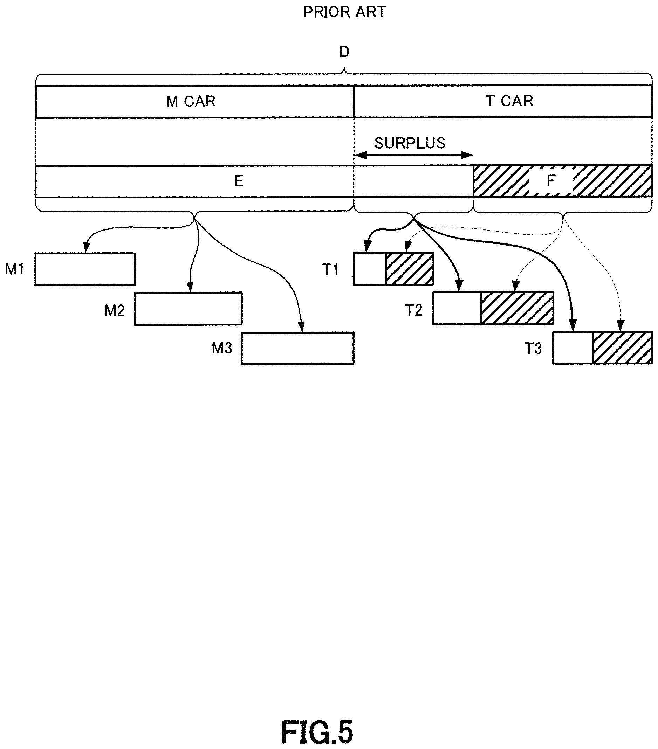

FIG. 5 is a drawing showing an overview of the weighted distribution to the T cars of the surplus electric brake force according to prior art. The top part of FIG. 5 shows the total of the necessary brake force of the train divided between M cars and T cars. The middle part of the FIG. 5 shows the proportion of the necessary brake force D allocated to the electric brake E and to the air brake F.

In the example of FIG. 5, a surplus is generated in the same state as in FIG. 4. The lower part of FIG. 5 shows the electric brake force and the air brake force distributed to multiple T cars T1, T2 and T3. The entirety of T1, T2 and T3 is the necessary brake force for the T cars T1, T2 and T3, respectively.

Of that, the shaded portion is the air brake force generated by the respective air brake devices. The white portion shows how much of the necessary brake force is covered by the electric brake force. In FIG. 5 the electric brake force surplus and the air brake force (the difference between the necessary brake force and the electric brake force) is distributed with weighting to the T cars T1, T2 and T3, respectively.

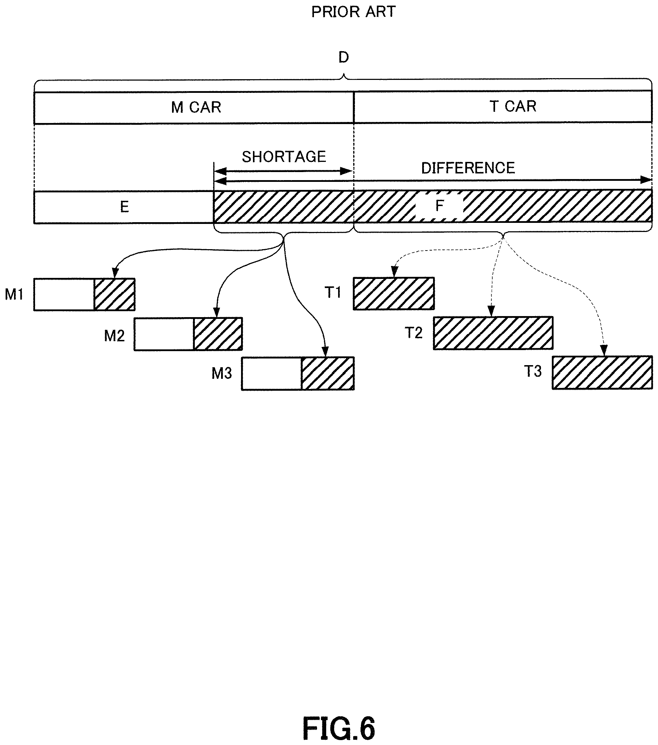

FIG. 6 is a drawing showing an overview of the weighted distribution to the M cars of the shortage in electric brake force according to prior art. The top part of FIG. 6 is the same as the top part of FIG. 5. The middle part of FIG. 6 represents the case when the electric brake force E is less than the necessary brake force of the M cars, so a shortage arises. In the lower part of FIG. 6, the electric brake force and air brake force distributed to multiple M cars are shown.

When a shortage in the electric brake force arises, the necessary brake force for the T cars is distributed with weighting to each of the T cars. That is to say, the air brake devices of the T cars allocate the necessary brake force for the respective cars. In FIG. 6, the shortage in the electric brake force E (the necessary brake force of the M cars minus the electric brake force E) is distributed with weighting to the air brake force of the multiple M cars M1, M2 and M3. The total of M1, M2 and M3 is the magnitude of the necessary brake force of the M cars.

Of that, the shaded portion is the air brake force generated by the respective air braking devices. The white portion represents the magnitude of the electric brake force generated by the M cars M1, M2 and M3, respectively. The total of the white portions of M1, M2 and M3 is equivalent to the electric brake force E in the middle part. The total of the shaded parts of M1, M2 and M3 is equivalent to the shortage in the middle part.

Within the range in which the electric brake force E changes in accordance with car speed shown in FIG.3, because the distributed air brake force F changes, in the case in FIG. 5, the brake control valves 22a and 22b in the air brake devices of all of the T cars operate following these changes. Furthermore, the electric brake force E is not a constant even in the maximum value state of FIG. 3, but fluctuates.

Accordingly, in the state in which the surplus of the electric brake force E of the T cars is distributed with weighting, the brake control valves 22a and 22b are always acting in the air brake devices of all of T cars. In addition, in the case of FIG. 6, the brake control valves 22a and 22b act in the air brake devices of all of the M cars, in conjunction with fluctuations in the electric brake force E.

With the embodiments of the present invention, distributing brake force to each car may be replaced with distributing brake force to the flatcars of the cars. In the explanation below, the case where the brake force is distributed to each car is described, but exactly the same result is achieve by replacing "car" with "car's flatcar." The explanation below can be understood by appropriately replacing "car" with "car or car's flatcar." If one car is composed of two flatcars and an air brake device is prepared on each flatcar and can be controlled independently, the embodiment of the present invention is also established for the case in which a train is composed of one car.

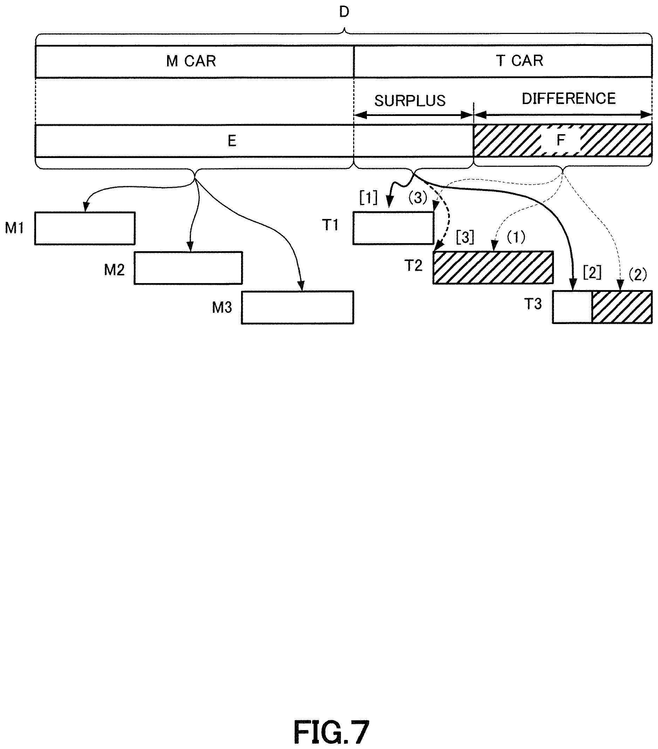

FIG. 7 is a drawing explaining a method for distributing a surplus of electric brake force according to the first embodiment. The top part and middle part of FIG. 7 are the same as the corresponding parts of FIG. 5. In the first embodiment, the brake force adjustment unit 13 distributes the necessary brake force D and the electric brake force E to the air brake force of the corresponding cars in a predetermined order successively until the difference is eliminated, for the necessary brake force amounts of the T cars.

Here, "predetermined order" means that during the action interval of at least one deceleration or from running to stopping of the train, the order of the cars (or flatcars) distributing the difference between the necessary brake force and the electric brake force to the air brake does not change.

To be more specific, if the order of distributing up to the difference in the state in which the electric brake force of FIG. 3 is a constant is constant, during internals in which the electric brake force increases and intervals of decrease, the distribution order may change after the difference in a state in which the electric brake force is constant may change.

With the example of FIG. 7, the order of the T cars distributing the difference is T2, T3, T1. In FIG. 7, the order of distributing the difference is represented by the figures in parentheses. In the example of FIG. 7, of the difference first the necessary brake force amount is distributed to the air brake of the T car T2. Next, the remaining difference is less than the necessary brake force of the T car T3, so all of the remainder is distributed to the air brake of the T car T3. Because the difference is eliminated, the air brake force of the T car T1 is 0.

Changing the way of looking at this, distribution of the difference is the surplus of the electric brake force being distributed (allocated to necessary brake force) to cars corresponding in the reverse order, successively until the surplus is eliminated, for the necessary brake force amount of the T cars. In the example of FIG. 7, the order of the T cars that are the subject of distribution of the surplus is T1, T3, T2.

In FIG. 7, the order of distributing the surplus is represented by the numbers in brackets. In the example of FIG. 7, out of the surplus first the necessary brake force amount for the T car T1 is distributed (allocated to necessary brake force). That is to say, from the necessary brake force of the T car T1, the same amount is allocated from the surplus and the air brake force of the T car T1 becomes 0.

Next, the remaining surplus is less than the necessary brake force for the T car T3, so all of the remainder is distributed (allocated) to the T car T3. That is to say, the value found by subtracting the remaining surplus from the necessary brake force for the T car T3 is made the air brake force of the T car T3. Because the surplus has been eliminated here, the surplus distributed to the T car T2 (the amount allocated by air brake force) is 0.

Accordingly, a value equivalent to the necessary brake force of the T car T2 is set as the air brake force thereof. As a result, the air brake forces of the T cars T1, T2 and T3 are the same as the difference between the necessary brake force D and the electric brake force E distributed to the corresponding cars successively in a predetermined order until the difference is eliminated, in amounts of necessary brake force of the T cars.

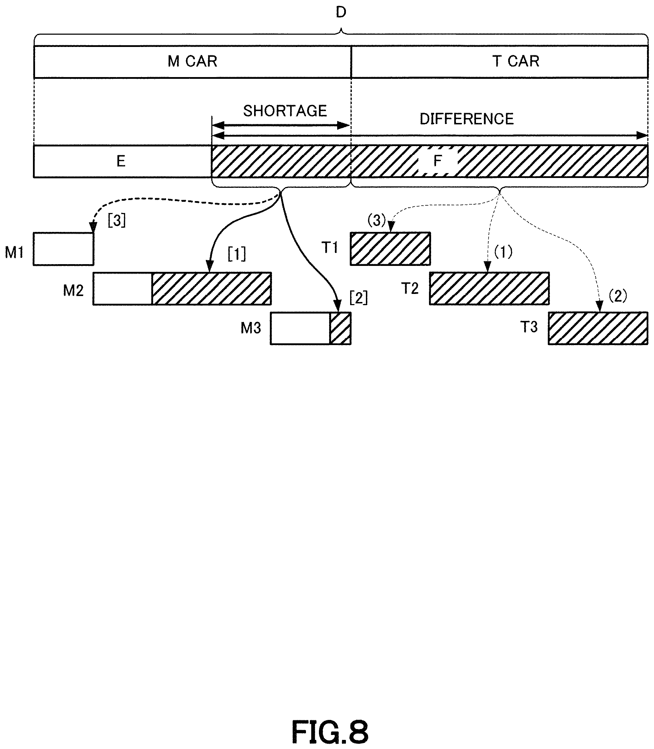

FIG. 8 is a drawing explaining a method for distributing a shortage of electric brake force according to the first embodiment. The top part and middle part of FIG. 8 are the same as the corresponding parts of FIG. 6. With the first embodiment, when the electric brake force E of the entire composition is less than the necessary brake force of the M cars, the brake force adjustment unit 13 distributes the difference between the necessary brake force D of the train and the electric brake force E to the air brake force of the T cars in amounts of necessary brake force for each T car, and furthermore distributes the shortage found by subtracting the electric brake force E of the entire composition from the necessary brake force of the M cars to the air brake force of the corresponding M cars successively in a predetermined order until the shortage is eliminated, in amounts of maximum air brake force for each M car.

With the example in FIG. 8, the difference (necessary brake force D minus electric brake force E) is first distributed to the T cars in amounts of necessary brake force for each. Here, the remainder of the difference is equivalent to the shortage found by subtracting the electric brake force E from the necessary brake force of the M cars. The order of M cars to which the shortage is allocated is M2, M3 and M1 in the example of FIG. 8.

In FIG. 8, the order of distributing the shortage is represented by numbers in brackets. Out of that shortage, the brake force adjustment unit 13 distributes the maximum brake force amount in the air brake devices of the M cars to the air brake of the M car M2. Next, the remaining shortage is less than the maximum brake force of the air brake device of the M cars, so all of the remainder is distributed to the air brake of the M car M3. Because the remaining shortage is eliminated, the air brake force of the M car M1 is 0.

Stating the method of distributing the brake force explained in FIG. 7 and FIG. 8 in different words, when the electric brake force of the entire composition of the train is less than the necessary brake force D of the entire composition of the train, the difference found by subtracting the electric brake force E from the necessary brake force D of the train is distributed to the air brake force of corresponding cars successively in a predetermined order until the difference is eliminated, in amounts of necessary brake force (for T cars) for each car of the train, or in amounts of maximum brake force to the air brake device (for M cars).

When the electric brake force E is at least as great as the necessary brake force D of the train, the necessary brake force D is entirely covered by the electric brake force E from the M cars, so it is not necessary to cause the air brakes to operate, and the difference between the necessary brake force D and the electric brake force E is not distributed.

In both FIG. 7 and FIG. 8, when the electric brake force E fluctuates, the air brake force fluctuates in accordance with that fluctuation only in the air brake device of the cars to which the air brake force is distributed last. In the example in FIG. 7, only the air brake force of the T car T3 fluctuates in response to fluctuations in the electric brake force E.

In addition, in the example in FIG. 8, only the air brake force of the M car M3 fluctuates in response to fluctuations in the electric brake force E. When the magnitude of the fluctuations in the electric brake force E exceeds the amount distributed to a single car, the electric brake force of the car whose order of distribution is before or after that is caused to change.

That is to say, fluctuations in the electric brake force E are covered by the air brake device of one car (or one flatcar) at one point in time so that the total of the electric brake force E and the air brake force F of the train becomes equal to the necessary brake force D for the train.

The brake force adjustment unit 13 of FIG. 1 conveys to the brake force command unit 14 the value of the air brake force for each car distributed by the method explained in FIG. 7 and FIG. 8. The brake force command unit 14 sends a command for the value of that air brake force to the respective air brake control devices 2.

The brake force command unit 14 of the control device 1 and the air brake control devices 2 comprise control units for controlling the air brake devices. Each air brake control device 2 controls the respective air brake device in accordance with the value of the air brake force ordered from the control device 1. As a result, the acting air brake device acts at the necessary brake force or maximum brake force of that car, excluding one car (or one flatcar).

Furthermore, fluctuations in the electric brake force are compensated for by the air brake device of one car (or one flatcar) at one point in time so that the total air brake force and electric brake force for the train becomes equal to the necessary brake force for the train. In addition, the number of air brake devices operating is reduced compared to the case of distributing with weighting the surplus or shortage in the electric brake force to the T cars or M cars.

Measurement errors occur in the air brake force generated by operation of the air brake device. When the brake force of multiple air brake devices are simultaneously caused to fluctuate to cover fluctuations in electric brake force, the error is added and becomes greater by the number of operating air brake devices.

In this embodiment, the air brake device of only one car (or one flatcar) fluctuates at one point in time, so errors related to fluctuations in the electric brake force are not summed. In addition, compared to the method of causing the brake forces of multiple air brake devices to change simultaneously, errors in air brake force related to changes in electric brake force are reduced.

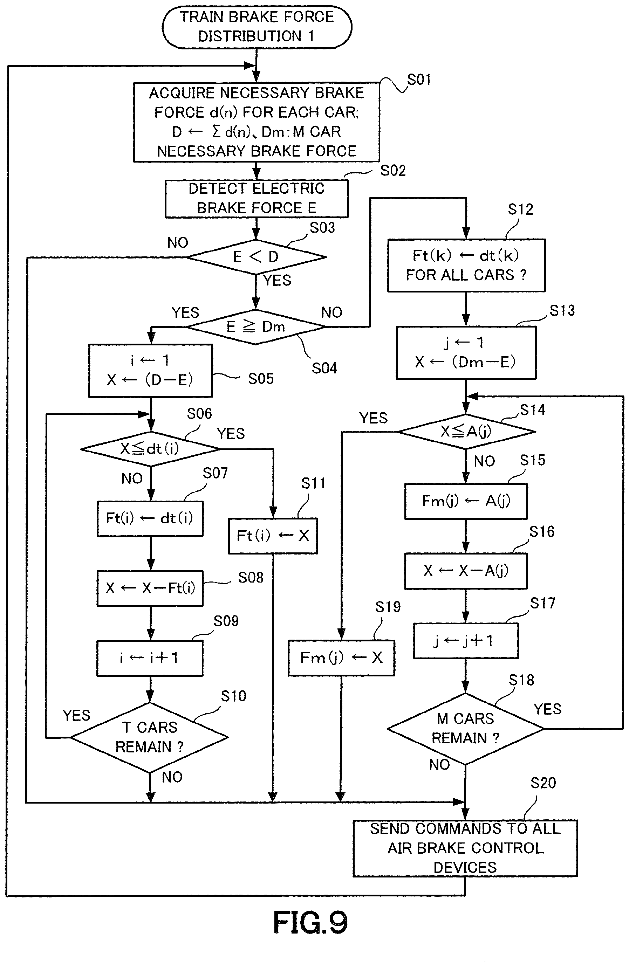

FIG. 9 is a flowchart showing one example of the action of the train brake force distribution according to the first embodiment. The necessary brake force acquisition unit 12 of the control device 1 acquires a necessary brake force d(n) for each car from the air brake control devices 2 of the entire train. Here, n is a positive integer ranging from 1 to the number of cars of the train.

Furthermore, the necessary brake force D for the train is calculated as the sum of d(n). In addition, the necessary brake force Dm for all M cars is computed from the necessary brake force d(n) (step S01). The necessary brake force for each T car is expressed as dt.

The electric brake force detection unit 11 inputs the value of the electric brake force of each car or each flatcar from the electric brake device 3. Furthermore, the electric brake forces are totaled to obtain the magnitude E of the electric brake force of the entire composition of the train (step S02). In addition, the air brake forces F(n) that should be generated by all of the air brake devices are set to 0. Of the air brake forces F(n) of each car, the air brake forces of the T cars are expressed as Ft and the air brake forces of the M cars are expressed as Fm.

If the electric brake force E is at least as large as the necessary brake force D (step S03: No), it is not necessary to cause the air brakes to operate, so the brake force adjustment unit 13 sets each air brake force F(n) to 0 and the brake force command unit 14 sends a command for that value to the air brake control device 2 of each car (step S20). The air brake control device 2 of each car controls that air brake in accordance with the commanded value. In this case, none of the air brake devices generates a brake force.

When the electric brake force E is less than the necessary brake force D (step 03: Yes), the flowchart branches depending on whether the electric brake force E is at least as great as the necessary brake force Dm of the M cars or less than such (step 04).

When the electric brake force E is at least as great as the necessary brake force Dm of the M cars (step 04: Yes), the variable i of the T cars is set to 1 and the variable X is set to the difference (D-E) found by subtracting the electric brake force E from the necessary brake force D (step 05). If X is greater than the necessary brake force dt(i) of the T car specified by the variable i (step 06: No), that necessary brake force dt(i) is set (distributed) to that air brake force Ft(i) of that T car (step S07).

Furthermore, the value of the variable X is updated to X-Ft(i) (step S08). The variable X represents what remains after the difference (D-E) is distributed from the air brake force. The number variable i of the T cars is incremented (step S09) and a determination is made as to whether or not a T car having that number exists (step S10). If there are remaining T cars (step S10: Yes), the flowchart returns to a comparison of X and the necessary brake force dt(i) of the ith T car (step S06).

If X is not greater than the necessary brake force for the T car specified by the variable i (step S06: Yes), X is set (distributed) as the air brake force Ft(i) of that T car (step S11). At this point in the time, the remainder of the difference that should be distributed is eliminated, so the air brake forces of the remaining T cars become 0 and the brake force command unit 14 sends a command for the set air brake forces to the air brake control devices 2 of each car (step S20).

Because the electric brake force E is at least as great as the necessary brake force Dm of the M cars and accordingly the difference (D-E) is less than the total of the necessary brake forces of the T cars, in reality the NO branch is not taken in the determination (step S10) of whether or not there are remaining T cars.

When the electric brake force E is less than the necessary brake force Dm for the M cars (step S04: No), the air brake force Ft(k) is set (distributed) to the necessary brake force dt(k) of that T car, for all T cars (step S12). This time, the number variable j of the M cars is set to 1, and the variable X is set to the shortage (Dm-E) found by subtracting the electric brake force E from the necessary brake force Dm for the M car (step S13).

If X is greater than the maximum air brake force A(j) generated by the air brake device of the M car of number variable j (step S14: No), the air brake force Fm(j) of that M car is set (distributed) to A(j) (step S15). Furthermore, the value of the variable X is updated to X-A(j) (step S16). The variable X represents the remainder after the air brake force has been distributed from the shortage (Dm-E).

The number variable j of the M car is incremented (step S17) and a determination is made as to whether or not an M car with that number exists (step S18). If there is a remaining M car (step S18: Yes), the flow returns to the comparison (step S14) of X and the maximum air brake force A(j) of the nth M car.

If X is no greater than the maximum brake force A(j) of the M car specified by the variable j (step S14: Yes), the air brake force Fm(j) of that M car is set (distributed) to X (step S19). At this point in time, the air brake force (remaining shortage) that was to be distributed is no longer needed, so the air brake force of the remaining M cars is 0 and the brake force command unit 14 sends a command for the set air brake force to the air brake control device 2 of each car (step S20).

In general, the air brake device of the M car is designed to cover the necessary brake force of a car even when the electric brake force is 0, so in reality the NO branch is not taken at the determination (step S18) of whether or not there is a remaining M car.

When the electric brake force E is at least as great as the necessary brake force Dm of the M car, after all of the remainder of the difference has been distributed to the air brake force of a given T car, or, when the electric brake force E is less than the necessary brake force Dm of the M car, after the remainder of the shortage has been distributed to the air brake force of a given M car, the brake force command unit 14 sends a command for the set air brake force to the air brake control device 2 of each car (step S20). The air brake control device 2 of each car controls that air brake in accordance with the value commanded.

As explained above, with the brake control device 10 of this first embodiment, to the extent that the surplus in the electric brake force of the entire composition is greater than the necessary brake force of one T car, the number of air brake devices acting in T cars is few compared to the case of the difference being distributed with weighting to the T cars.

In addition, when the electric brake force of the entire composition is less than the necessary brake force for the M cars (when a shortage occurs), to the extent that the electric brake force of the entire composition is greater than the necessary brake force for one M car, the number of air brake devices acting in M cars is few compared to the case of distributing the shortage with weighting.

In both cases, when the electric brake force fluctuates, the air brake force fluctuates in accordance to that fluctuation only in the air brake device of cars to which the air brake force was ultimately distributed.

Accordingly, compared to the case of distributing the air brake force with weighting, the frequency with which the electromagnetic valves of the air brake device are caused to operate is reduced. In particular, compared to the case of covering fluctuations in the electric brake force with the air brake devices as a whole for the train, the frequency with which the electromagnetic valves of the air brake devices are caused to operate is greatly reduced.

The life of the electromagnetic valves is considered to be the time until the accumulated operation count reaches a specified durability operation count, so with the brake control device 10 according to this embodiment, as a result of the operation frequency of the electromagnetic valves per deceleration or stopping of the train declining, the life of the electromagnetic valves of the air brake control devices 2 can be extended.

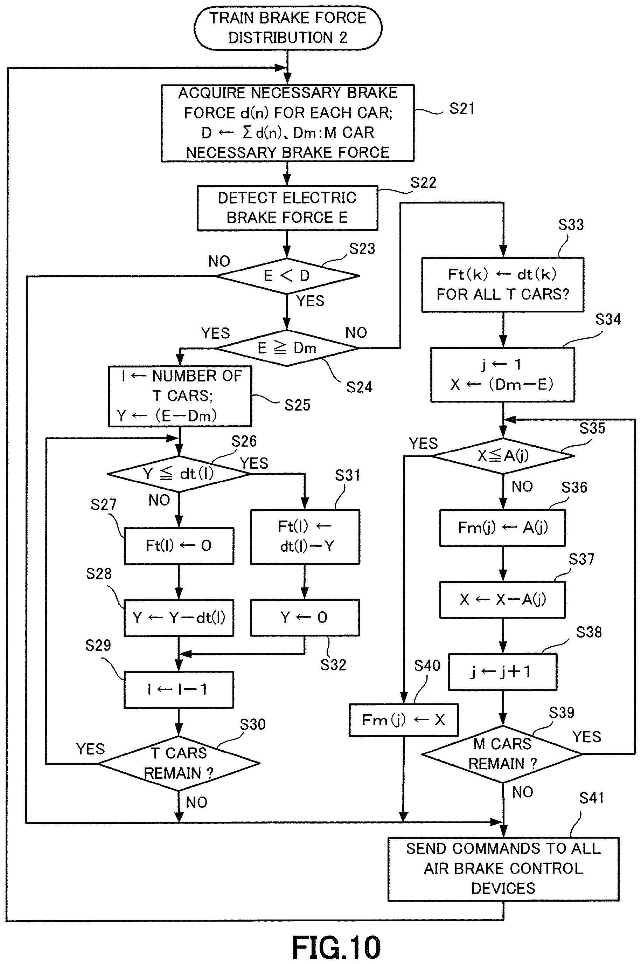

FIG. 10 is a flowchart showing one example of the action from a different view point of train brake force distribution according to the first embodiment. FIG. 10 differs from FIG. 9 in the action step when the electric brake force E is at least as great as the necessary brake force Dm of the M cars. Other than this (steps S21-S24, steps S33-S41), this flowchart is the same as the flowchart in FIG. 9 (steps S01-S04, steps S12-S20).

FIG. 10 corresponds to the view of distributing the surplus of the electric brake force of FIG. 7 (allocating to necessary brake force) to corresponding cars in reverse order, successively until the surplus is eliminated, in amounts of the necessary brake forces of the T cars.

When the electric brake force E is at least as great as the necessary brake force Dm for the M cars (step S24: Yes), the brake force adjustment unit 13 sets the number of the T car as the number variable I of the T cars and sets the surplus (E-Dm) found by subtracting the necessary brake force Dm for the M cars from the electric brake force E as the variable Y (step S25).

In FIG. 10, the electric brake force is set in the T cars in the reverse order from FIG. 9, so the number variable is changed to I and is expressed so as to decrement from the number of the T car.

If Y is greater than the necessary brake force dt(I) of the T car specified by the variable I (step S26: No), all of the necessary brake force dt(I) of that T car is allocated by the surplus of the electric brake force E (step S27). That is to say, the air brake force Ft(I) of that T car is set to 0 (dt(I) is distributed from the electric brake force E). Furthermore, the value of Y is updated to Y-dt(I) (step S28).

The variable Y expresses the remainder allocated to the air brake force from the surplus (E-Dm). The number variable I of the T cars is decremented (step S29) and a determination is made as to whether there is a T car with that number (step S30). If a T car remains (step S30: Yes), the flowchart returns to a comparison of Y and the necessary brake force dt(I) of the Ith T car (step S26).

If Y is not greater than the necessary brake force of the T car specified by the variable I (step S26: Yes), a value (dt(I)-Y) found by subtracting the remainder Y of the surplus from the necessary brake force for that T car is set (distributed) to the air brake force Ft(I) of that T car (step S31). At this point in time, the surplus to be allocated to air brake force is eliminated, so Y is set to 0 (step S31).

The number variable I of the T car is then decremented (step S29) and a determination is made as to whether there is a T car with that number (step S30). If a T car remains (step S30: Yes), the flowchart returns to a comparison of Y and the necessary brake force dt(I) of the Ith T car (step S26). After the remainder Y of the surplus has become 0, the necessary brake force dt(I) of that T car is set as the air brake force Ft(I) of the remaining T car (step S31).

If there is no remaining T car (step S30: No), the electric brake force has been set for all T cars, so the brake force command unit 14 sends a command for the set air brake force to the air brake control device 2 of each car (step S41). The air brake control device 2 of each car controls that air brake in accordance with the value commanded.

### Variation of First Embodiment

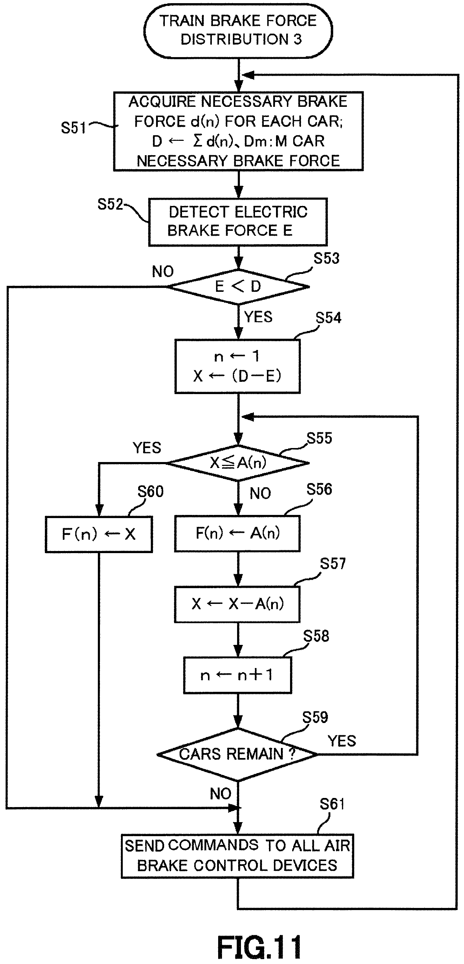

FIG. 11 is a flowchart showing one example of the action of train brake force distribution according to a variation of the first embodiment. In this variation, the necessary brake force of a T car is not distributed to the air brake device of that T car, but rather the maximum air brake force generated by that air brake device is distributed to the T car.

In FIG. 11, from step S51 in which the necessary brake force d(n) is acquired to step S53 in which the electric brake force E and the necessary brake force D are compared are the same as steps S01 to S03 in FIG. 9. When the electric brake force E is less than the necessary brake force D (step S53: Yes), the brake force adjustment unit 13 sets the number variable n of the car to 1 and sets the variable X to the difference (D-E) found by subtracting the electric brake force E from the necessary brake force D (step S54). Here, the order is such that the fewer car numbers are T cars and the number of any M car is greater than the numbers of all T cars.

If X is greater than the maximum air brake force A(n) generated by the air brake device of the car having number variable n (starting with T cars) (step S55: No), A(n) is set (distributed) as the air brake force F(n) of that car (step S56). Furthermore, the value of the variable X is updated to X-A(n) (step S57). The variable X represents the remainder after the air brake force has been distributed from the difference (D-E).

The number variable n of the car is then incremented (step S58) and a determination is made as to whether or not a car having that number exists (step S59). If there is a remaining car (T car or M car) (step S59: Yes), the flowchart returns to the comparison (step S55) of X and the maximum air brake force A(n) of the nth car.

If X is not greater than the maximum brake force A(n) of the car specified by the variable n (step S55: Yes), the air brake force F(n) is set (distributed) to X (step S60). At this point in time, the air brake force that was to be distributed (remaining difference) has been eliminated, so the air brake force of the remaining cars remains 0 and the brake force command unit 14 sends a command of the set air brake force to the air brake control device 2 of each car (step S61).

In general, the total of the maximum air brake force of each car is greater than the necessary brake force for the train, so in reality the flowchart does not branch to NO at the determination (step S59) of whether or not there is a remaining car.

In this variation, the surplus or shortage that is the difference between the electric brake force and the necessary brake force of the M cars is not computed, so the computation unit 15 of FIG. 1 is not essential.

With this variation, the number of air brake devices that act is further reduced compared to the brake force distribution of FIG. 9 or FIG. 10. However, in the T cars to which the maximum air brake force is distributed, a brake force greater than the necessary brake force for that T car is generated, becoming a burden on the extent of the brake force of other cars.

Conversely, when the shortage of electric brake force shown in FIG. 8 is distributed, the distribution need not be by the maximum brake force generated by the air brake device of the M car but may be by the necessary brake force for the M car. In this case, the number of air brake devices that act out of the M cars is greater than in the case of FIG. 9 or FIG. 10, but the brake force with which the air brake devices of the M cars are burdened is reduced.

Above, a case was explained wherein the difference between the electric brake force and the necessary brake force of the train was distributed to the air brake force of corresponding cars or flatcars in a predetermined order successively until the difference was eliminated, in amounts of the necessary brake force of the cars or flatcars, or the maximum brake force of the air brake device of the cars or flatcars.

With the train brake control device of the first embodiment, the magnitude of successively distributing the difference to the air brake force of the cars or flatcars may be in amounts within a range at least as great as the necessary brake force of each car or flatcar of the train and not greater than the maximum brake force of the air brake device of that car or flatcar.

The magnitude of distributing the difference to the air brake force can be realized even at not greater than the necessary brake force of each car or flatcar, but in the sense of being able to distribute without fail and being able to reduce the number of air brake devices that act, it is rational for this to be at least the necessary brake force of each car or flatcar.

In the first embodiment, the order of cars to which the difference between the necessary brake force and the electric brake force is distributed may be arbitrarily set as long as this is not changed in an action period of at least one deceleration or from running to stopping of the train. For example, the order of T cars when distributing the difference when a surplus of electric brake force is generated can be set so as to distribute in an order starting with the largest necessary brake force.

The surplus of the electric brake force can be distributed in an order starting from the T car with the smallest necessary brake force. When this is done, the number of T cars in which the air brake devices act can be reduced. In addition, because there is a large possibility with the lead car that running in which the wheels slip on the rails and gliding such that the rotational speed of the wheels drops could occur, making a setting so that distribution of the difference occurs last can be conceived.

With the first embodiment, it is envisioned that the difference between the necessary brake force and the electric brake force of the train will be distributed first to the T cars and the difference will be distributed to the M cars only after the electric brake force has become less than the necessary brake force of the M cars (and a shortage occurs). With the sole objective of reducing the number of air brake devices that act and limiting to one the air brake devices that absorb fluctuations in the electric brake power at one point in time, it is necessary to distribute the difference first to the T cars.

Even when distributing the difference first to M cars generating electric brake force, if distribution is in order of amounts within a range not less than the necessary brake force of the car and not greater than the maximum brake force, it is possible to reduce the number of air brake devices that act and to limit to one the air brake devices that absorb fluctuations in the electric brake force. However, distributing the difference first to the T cars can reduce the stress on related sections between cars generated during deceleration.

Even in the case when the train is composed only of M cars and does not include T cars, the brake control device 10 of the first embodiment is effective. In this case, the necessary brake force for the train and the necessary brake force of the M cars match, so the state shown in FIG. 7 need not be taken into consideration. When the electric brake force is smaller than the necessary brake force, the T car part in FIG. 8 disappears leaving only the M car part.

A flowchart of the action in the case of only M cars would have no route for when E ≥ Dm is true in FIG. 8 or FIG. 10 (Yes to step S04 in FIG. 9; Yes to step S24 in FIG. 10), and there would be no action distributing the air brake force to the T cars (step S12 in FIG. 9; step S33 in FIG. 10).

### Second Embodiment

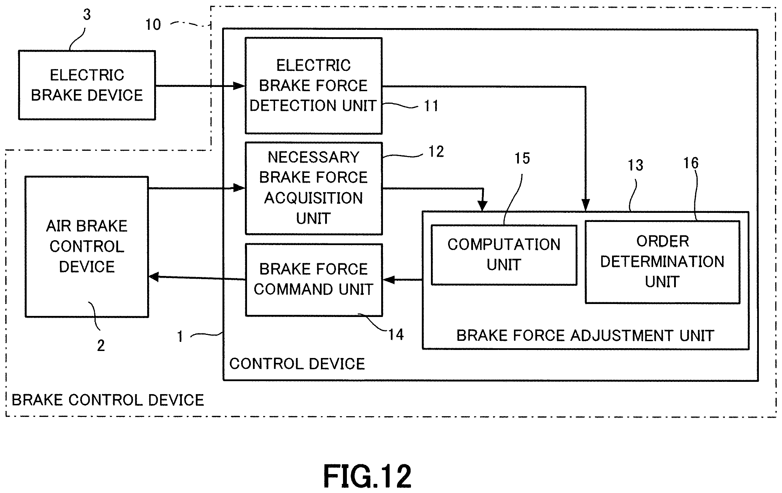

FIG. 12 is a block diagram showing an exemplary composition in which a brake control device according to a second embodiment of the present invention is applied to a train. The control device 1 of the second embodiment changes the order of the cars or flatcars to which the difference between the necessary brake force and the electric brake force is distributed to a predetermined period.

Here, "predetermined period" may be arbitrarily determined as long as a condition is satisfied that the order of cars or flatcars to which the difference between the necessary brake force and the electric brake force is distributed is not changed during the action time from running to stopping or at least one deceleration of the train. With the second embodiment, in addition to the composition of the control device 1 according to the first embodiment, an order determination unit 16 is provided.

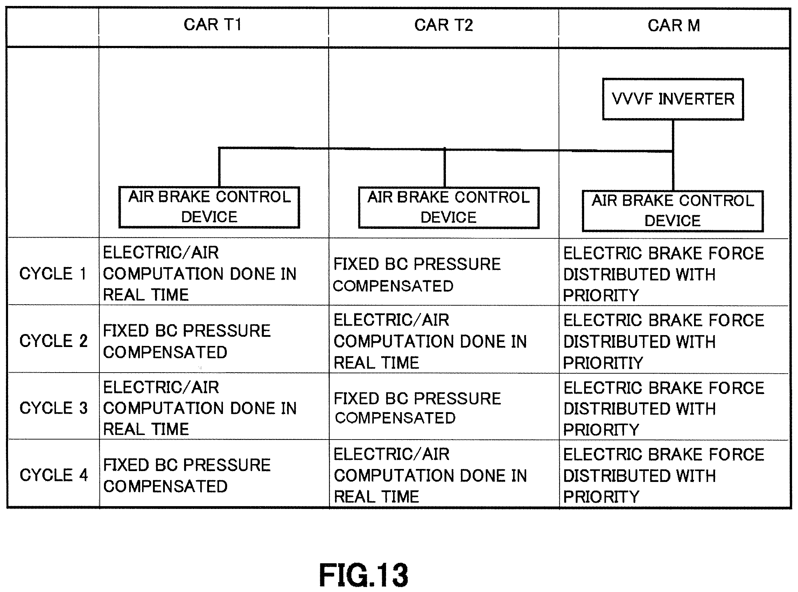

The order determination unit 16 changes the order of cars to which the brake force is distributed during a prescribed period. FIG. 13 is a drawing explaining an example of a changed order for distributing brake force according to the second embodiment. With FIG. 13, an example is illustrated of a case in which two T cars, car T1 and car T2, are included in the train, and one M car is represented.

In the first cycle of FIG. 13, the difference is distributed first from car T2. Here, to facilitate the understanding the explanation is for a case in which a surplus of electric brake force is generated and the difference exceeds the necessary brake force for one T car. The car T2 first has the necessary brake force amount for that car distributed and compensates for (supplements) the electric brake force with a fixed brake cylinder pressure.

At this time, the car T1 has the surplus of electric brake force allocated and is controlled by a brake force smaller than the necessary brake force of the car T1. Accordingly, the amount of fluctuation in the electric brake force is compensated for by controlling the air brake device of the car T1 in real time (called an electric-air computation).

In the second cycle, the order of T cars distributing the brake force is changed and the difference is distributed first from the car T1. With the car T1, the electric brake force is covered by a fixed brake cylinder pressure, and fluctuations in the electric brake force are compensated for by accomplishing an electric-air computation on the air brake device of the car T2 in real time.

With the example in FIG. 13, there are two T cars, so in the third cycle, the arrangement returns to the same as the first cycle and the difference is distributed first from the car T2. In the fourth cycle, the arrangement is the same as in the second cycle, and the difference is distributed first from the car T1. Similarly, the order of distributing the brake force is alternately changed thereafter. Similarly for the M car as well, the order of distributing the difference (shortage) between the necessary brake force for the M car and the electric brake force is changed.

Changes in the order of distributing the brake force may as a rule be accomplished at any time so long as this is not during one deceleration. For example, changes in the order with the following timing can be conceived.
*Changes in the order each time the train stops.
*Changes in the order each time the train's direction of progress changes.
*Changes in the order when the main power source of the train is introduced. In this case, make it so the previous order is known.
*Changes with a fixed period.

The timing of changing the order is not limited to the above-cited examples. In addition, conditions that combine these may be changed as well.

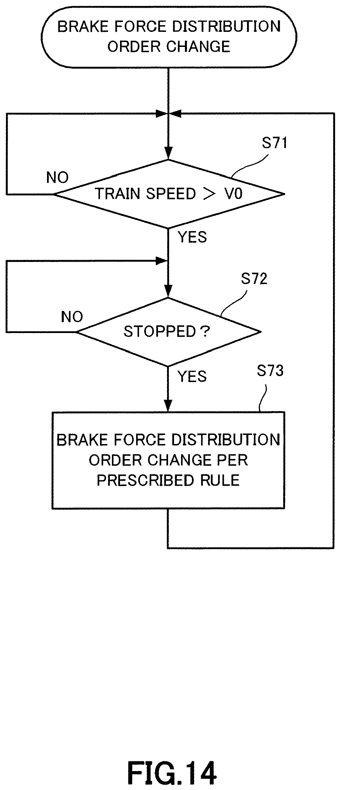

FIG. 14 is a flowchart showing one example of the action of a brake force distribution order change according to the second embodiment. The example in FIG. 14 changes the order of distribution each time the train stops.

The order determination unit 16 uses some kind of method to input information about the train's speed from command information from the driver, for example. The unit waits for movement to start from the speed of the train being 0 (in other words, a stopped train) (step S71: No).

If the train has begun running (step S71: Yes), now the unit waits for stopping of the train to be detected (step S72: No). If the train stops (step S72: Yes), the brake force distribution order is changed per a prescribed rule (step S73). For the brake force distribution order, multiple distribution orders may be placed in a table in advance and a method of selecting the distribution order in order from among these can be used.

In addition, for example the T car and M car numbers may each be set in a round robin. Or, excluding the lead car the cars may be set randomly, and the lead car may be put last. In addition, the frequency with which the air brake device operates or the frequency with which the electromagnetic valves operate may be counted, and the order may be changed so that the operation frequencies becomes equal.

As explained above, with the brake control device 10 of the second embodiment, because the brake force distribution order at a prescribed period is changed at a predetermined period, the operating frequency of the electromagnetic valves of the air brake devices can be equalized without the operating air brake device being biased. As a result, it is possible to equalize and extend the lives of the electromagnetic valves without the length of the electromagnetic valves' lives being biased.

### Third Embodiment

The brake control device 10 of the third embodiment distributes the surplus or shortage that is the difference between the necessary brake force for the M car and the electric brake force to the T cars or M cars with weighting. However, in the third embodiment, fluctuations in the air brake force are supplemented by the air brake device of one car or one flat car at one point in time so that the total of the electric brake force and the air brake force of the train becomes the total of the necessary brake force for each car or flatcar of the train.

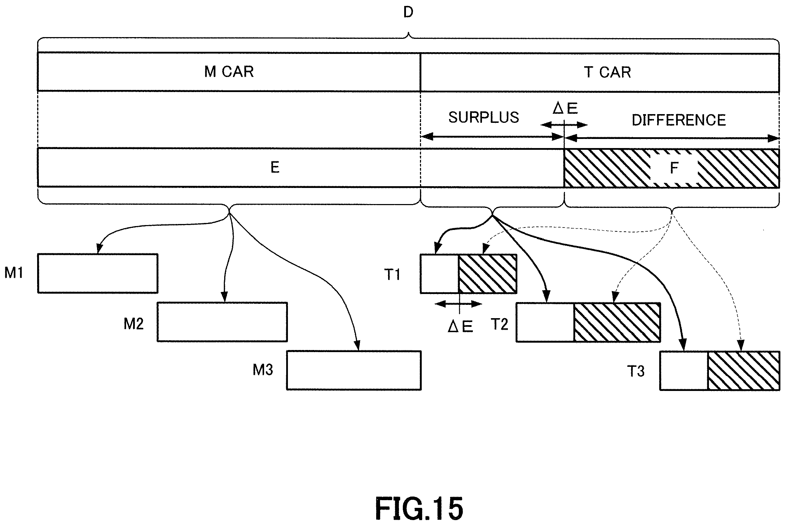

FIG. 15 is a drawing explaining a method for distributing a surplus of electric brake force according to the third embodiment of the present invention. The top part and middle part of FIG. 15 are the same as in FIG. 5 or FIG. 7. In FIG. 15, the difference between the necessary brake force D and the electric brake force E is distributed with weighting to the T cars, the same as in FIG. 5. Or, this may be viewed as the surplus that is the difference between the electric brake force E and the necessary brake force for the M cars being distributed with weighting to the T cars.

To this point this is the same as in FIG. 5, but fluctuations in the electric brake force E of the entire composition of the train are covered by the air brake device of one T car. For example, when the fluctuation ΔE of the electric brake force E is covered by the T car T1, the air brake devices of the other T cars T2 and T3 maintain the constant air brake force distributed.

In order for fluctuations in the electric brake force E to be covered by the air brake device of one T car, for example until the amount of change in the electric brake force E after weighted distribution of the difference between the necessary brake force D and the electric brake force E exceeds a prescribed value, redistribution of the brake force is not accomplished and fluctuations are allocated to the air brake device of any one T car.

When the amount of change in the electric brake force E exceeds the prescribed range of the brake force of the air brake device of the car to which the fluctuations were allocated, the difference between the necessary brake force D and the electric brake force E is redistributed.

The prescribed range of the amount of change in the electric brake force E that is the standard for the determination to undertake redistribution of the difference is, for example, the smaller of the necessary brake force for the car to which the fluctuations were allocated or the difference between the maximum air brake force of that car and the necessary brake force.

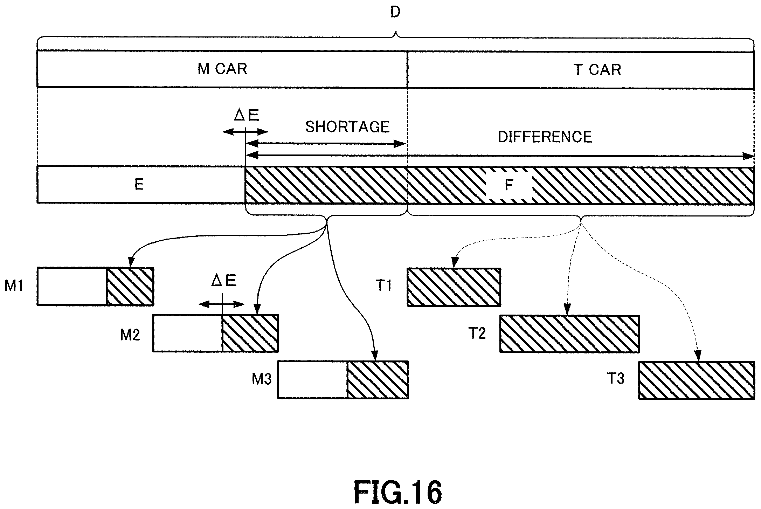

FIG. 16 is a drawing explaining a method for distributing a shortage of electric brake force according to the third embodiment. The top part and middle part of FIG. 16 are the same as those of FIG. 6 or FIG. 8. In FIG. 16, the air brake devices of the T cars apportion the necessary brake force for the respective cars and distribute with weighting the shortage in the electric brake force (the necessary brake force for the M cars minus the electric brake force E) to the air brake force of multiple M cars M1, M2 and M3.

To this point, this is the same as in FIG. 6, but fluctuations in the electric brake force E of the entire composition of the train are covered by the air brake device of one M car. For example, when the fluctuation ΔE of the electric brake force E is compensated for by the M car M2, the air brake devices of the other M cars M1 and M3 maintain the constant air brake force distributed.

In order for fluctuations in the electric brake force E to be covered by the air brake device of one M car, for example until the amount of change in the electric brake force E exceeds a prescribed value, redistribution of the brake force is not accomplished and fluctuations are allocated to the air brake device of any one M car.

When the amount of change in the electric brake force E exceeds the prescribed range of the brake force of the air brake device of the car to which the fluctuations were allocated, the shortage that is the difference between the necessary brake force for the M car and the electric brake force E is redistributed.

The prescribed range of the amount of change in the electric brake force E that is the standard for the determination to undertake redistribution of the shortage is, for example, the smaller of the air brake force distributed to the car to which the fluctuations were allocated or the difference between the maximum air brake force of that car and the distributed air brake force.

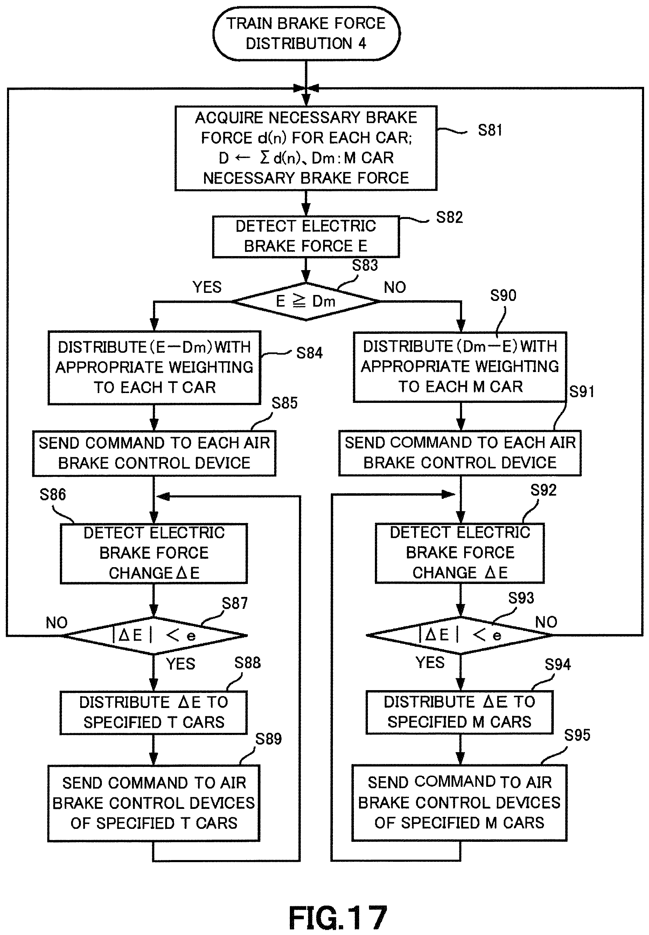

FIG. 17 is a block diagram showing an example of the action of train brake force distribution according to the third embodiment. In FIG. 17, from step S81 for acquiring the necessary brake force d(n) to step S82 for detecting the electric brake force E are the same as step S01 to step S02 in FIG. 9.

Because there is no distribution of brake force in the case when the electric brake force E is at least as great as the necessary brake force D, the comparison of the electric brake force E and the necessary brake force D (step S03 in FIG. 9) is omitted in FIG. 17 to make understanding easier.

The flowchart branches depending on whether the electric brake force E is at least as great as or is smaller than the necessary brake force Dm of the M car (step S83). When the electric brake force E is at least as great as the necessary brake force Dm of the M car (step S83: Yes), the brake force adjustment unit 13 distributes the surplus that is the difference between the electric brake force E and the necessary brake force Dm of the M car to the various T cars with appropriate weighting (step S84).

The brake force command unit 14 sends a command for the value distributed with appropriate weighting to each air brake control device 2 (step S85). The air brake control device 2 of each car controls that air brake in accordance with the value commanded.

The electric brake force detection unit 11 detects the change ΔE in the electric brake force when the brake force has been distributed with appropriate weighting (step S86). When the absolute value of ΔE is smaller than a prescribed value e (step S87: Yes), the brake force adjustment unit 13 distributes ΔE to specific T cars (step S88). That is to say, ΔE is subtracted from the air brake force of those T cars. The brake force command unit 14 sends a command for the altered air brake force to the specified T cars (step S89).

Furthermore, the flowchart then returns to detecting electric brake force change (step S86). When the absolute value of the change ΔE in the electric brake force is at least as great as the prescribed value e (step S87: No), the flowchart returns to step S81 and repeats the steps starting with necessary brake force acquisition for each car.

When the electric brake force E is smaller than the necessary brake force Dm of the M car (step S83: No), the brake force adjustment unit 13 distributes the shortage that is the difference between the necessary brake force for the M cars and the electric brake force to each M car with appropriate weighting (step S90).

In addition, the respective necessary brake forces are distributed (with appropriate weighting) to the T cars. The brake force command unit 14 sends a command for the value distributed with appropriate weighting to each air brake control device 2 (step S91). The air brake control device 2 of each car controls that air brake in accordance with the value commanded.

The electric brake force detection unit 11 detects the change ΔE in the electric brake force when the brake force has been distributed with appropriate weighting (step S92). When the absolute value of ΔE is smaller than the prescribed value e (step S93: Yes), the brake force adjustment unit distributes ΔE to specified M cars (step S94). That is to say, ΔE is subjected from the air brake force of those M cars.

The brake force command unit 14 sends a command for the altered air brake force to the specified M cars (step S95). Furthermore, the flowchart then returns to detecting electric brake force change (step S92). When the absolute value of the change ΔE in the electric brake force is at least as great as the prescribed value e (step S93: No), the flowchart returns to step S81 and repeats the steps starting with necessary brake force acquisition for each car.

As explained above, with the brake control device 10 of this third embodiment, the difference between the necessary brake force for the train and the electric brake force is distributed with appropriate weighting to the air brake device of each car, but when the electric brake force fluctuates, the air brake force that fluctuates in response to this fluctuation is only that of the air brake device of a specified car to which the change in the electric brake force was distributed.

As a result, compared to the case of constantly distributing the air brake force with appropriate weighting, in the air brake devices of the train as a whole the frequency with which the electromagnetic valves of the air brake devices are caused to operate to compensate for the fluctuations of the air brake force declines. As a result, it is possible to extend the life of the electromagnetic valves of the air brake devices.

With this third embodiment, the train is assumed to have two or more units with which the air brake force can be controlled. The units with which the air brake force can be controlled are numerous in a normal car or flatcar. For example, when the train is composed of only one motor car and there is one air brake device (units with which the air brake force can be controlled), there is inevitably one air brake device that compensates for fluctuations in the electric brake force.

When the train is composed of two or more cars including a motor car and there are two or more air brake devices, by applying the composition of the third embodiment, the frequency with which the electromagnetic valves of the air brake device operate is reduced by the fluctuations in the electric brake force being compensated for by one air brake device.

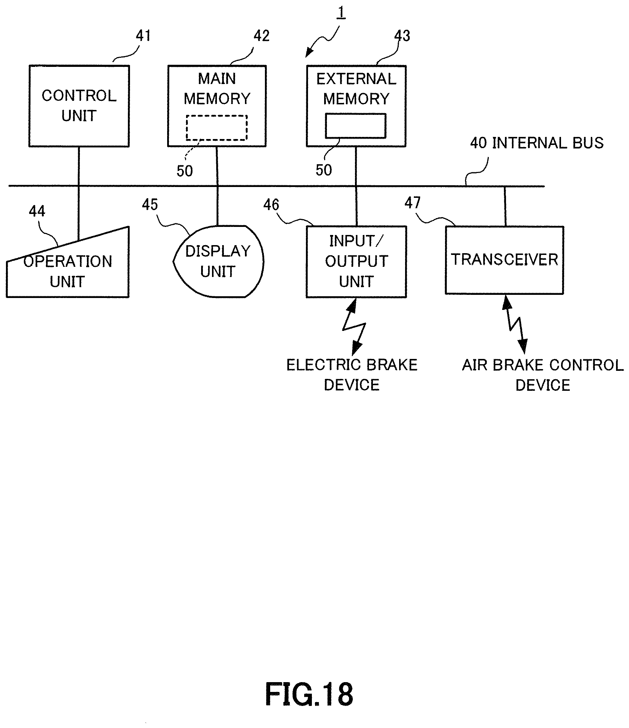

FIG. 18 is a block diagram showing an example of the physical composition of a train brake control device according to the embodiments of the present invention. FIG. 18 shows one example of the hardware composition of the control device 1 shown in FIG. 1 or FIG. 12.

As shown in FIG. 18, the control device 1 has a control unit 41, a main memory 42, an external memory 43, an operation unit 44, a display unit 45, an input/output unit 46 and a transceiver 47. The main memory 42, external memory 43, operation unit 44, display unit 45, input/output unit 46 and transceiver 47 are each connected to the control unit 41 via an internal bus 40.

The control unit 41 is composed of a CPU (Central Processing Unit) and the like, and executes the processes of the control device 1 in accordance with a control program 50 stored in the external memory 43.

The main memory 42 is composed of a RAM (Random Access Memory) and the like, loads the control program 50 stored in the external memory 43 and is used as a work area for the control unit 41.

The external memory 43 is composed of non-volatile memory such as a flash memory, a hard disk, a DVD-RAM (Digital Versatile Disc Random Access Memory), a DVD-RW (Digital Versatile Disc ReWritable) and the like, stores in advance a program for causing the control unit 41 to execute the above-described processes, and in addition supplies data this program stores to the control unit 41, in accordance with instructions from the control unit 41, and stores data supplied from the control unit 41.

The operation unit 44 is composed of a keyboard and a pointing device such as a mouse and the like, and an interface device that connects the keyboard and pointing device and the like to the internal bus 40.

Data such as the composition of the train and the order of T cars and M cars to which the brake force will be distributed is received via the operation unit 44. In addition, conditions for changing the distribution order of the brake force is input and supplied to the control unit 41. The operation unit 44 is not essential.

The display unit 45 is composed of a CRT (Cathode Ray Tube) or an LCD (Liquid Crystal Display) and the like, and displays data such as the composition of the train and the order of T cars and M cars to which the brake force will be distributed. The display unit 45 is not essential.

The input/output unit 46 is composed of a serial interface or a parallel interface for connecting sensors that detect the electric brake force or the electric brake devices 3. The magnitude of the electric brake force from the electric braked devices 3 or data detected by sensors for detecting the electric brake force is input into the control unit 41 via the input/output unit 46.

The transceiver 47 is composed of a serial interface or a LAN (Local Area Network) interface for connecting to the brake network of the train. The transceiver 47 receives the necessary brake force for that car or flatcar from the air brake control device 2 and sends the value of the air brake force that is to be generated by that air brake control device 2.

The processes of the electric brake force detection unit 11, the necessary brake force acquisition unit 12, the brake force adjustment unit 13 and the brake force command unit 14 of FIG. 1 or FIG. 12 are executed by processes using as resources the control unit 41, the main memory 42, the external memory 43, the operation unit 44, the display unit 45, the input/output unit 46 and the transceiver 47.

### Explanation of Numerical References

- 1: = Control device
- 2: = Air brake control device
- 3: = Electric brake device
- 10: = Brake control device
- 11: = Electric brake force detection unit
- 12: = Necessary brake force acquisition unit
- 13: = Brake force adjustment unit
- 14: = Brake force command unit
- 15: = Computation unit
- 16: = Order determination unit
- 21: = Brake control unit
- 22a, 22b: = Brake control valve
- 23a, 23b: = Relay valve
- 24a, 24b: = Pressure sensor
- 24c, 24d: = Pressure sensor
- 25: = AS pressure sensor
- 40: = Internal bus
- 41: = Control unit
- 42: = Main memory
- 43: = External memory
- 44: = Operation unit
- 45: = Display unit
- 46: = Input/output unit
- 47: = Transceiver
- 50: = Control program

## Claims

1. A brake control device, comprising:
- a necessary brake force acquisition unit (12) adapted to acquire a necessary brake force necessary for each car or flatcar of a train containing a plurality of motor cars (M) holding a primary electric motor;
- an electric brake force detection unit (11) adapted to detect an electric brake force of an entire composition of the train, the entire composition including the plurality of the motor cars (M);
- a brake force adjustment unit (13) adapted to distribute air brake force so as to compensate for fluctuations in the electric brake force with the air brake force of one of the cars or flatcars, in the action period of one deceleration of the train or from running to stopping; and
- a control unit (2) adapted to control an air brake force of each car or flatcar in accordance with a value distributed by the brake force adjustment unit (13),
**characterized in that**
the brake force adjustment unit (13) is adapted to distribute an air brake force in such a manner that fluctuations in the electric brake force are compensated for by an air brake device of only one car or flatcar at any one point in time.

2. The brake control device of claim 1,
**characterized in that** the brake force adjustment unit (13) is adapted to distribute the air brake force in a predetermined order so as to successively satisfy the necessary brake force for each car or flatcar, for the difference between the necessary brake force of the entire composition and the electric brake force, until that difference is eliminated.

3. The brake control device of claim 1 or 2,
**characterized in that** the brake force adjustment unit (13) is adapted to distribute the difference to the air brake force of the cars or flatcars within a range no less than the necessary brake force necessary for each car or flatcar on the train and no greater than the maximum brake force in an air brake device of the cars or flatcars.

4. The brake control device of claim 1 or 2,
further comprising:
a computation unit (15) for computing the surplus electric brake force or the shortage of electric brake force, being the difference between the electric brake force of the entire composition and the necessary brake force necessary for the motor cars of the train;
wherein the brake force adjustment unit (13):
when there is a surplus electric brake force, is adapted to distribute that surplus electric brake force in a predetermined order so as to satisfy the necessary brake force for each trailer car (T) pulled by the motor cars (M) or each flatcar of a trailer car; and
when there is a shortage electric brake force, is adapted to distribute an air brake force corresponding to that shortage electric brake force in a predetermined order so as to satisfy the necessary brake force of the motor cars or flatcars of each.

5. The brake control device of claim 1 or 2,
**characterized in that** the brake force adjustment unit (13) is adapted to distribute the electric brake force or the air brake force to each of the cars or flatcars in a fixed order in the action period of at least one deceleration of the train or from running to stopping.

6. The brake control device of claim 5,
**characterized in that** the brake force adjustment unit (13) is adapted to alter at a predetermined period the order of distributing the difference to the air brake force of the train cars or flatcars.

7. The brake control device of claim 1 or 2,
**characterized in that** fluctuations in the air brake force of one car or flatcar are compensated so that the total of the air brake force and the electric brake force of the train and the total of the necessary brake force for the train become equal.

8. A brake control method, comprising the following steps:
- a necessary brake force acquisition step (S01) for acquiring a necessary brake force necessary for each car or flatcar of a train containing a plurality of motor cars (M) holding a primary electric motor;
- an electric brake force detection step (S02) for detecting an electric brake force of an entire composition of the train, the entire composition including the plurality of the motor cars;
- a brake force adjustment step for distributing air brake force so as to compensate for fluctuations in the electric brake force with the air brake force of one of the cars or flatcars, in the action period of one deceleration of the train or from running to stopping; and
- a control step for controlling the air brake force of each car or flatcar in accordance with a value distributed by the brake force adjustment step,
**characterized in that**
in the brake force adjustment step, the air brake force is distributed in such a manner that fluctuations in the electric brake force are compensated for by an air brake device of only one car or flatcar at any one point in time.

9. The brake control method of claim 8,
**characterized in that** the brake force adjustment step distributes the air brake force in a predetermined order so as to successively satisfy the necessary brake force for each car or flatcar, for the difference between the necessary brake force of the entire composition and the electric brake force, until that difference is eliminated.

10. The brake control method of claim 9,
**characterized in that** the brake force adjustment step distributes the difference to the air brake force of the cars or flatcars within a range no less than the necessary brake force necessary for each car or flatcar on the train and no greater than the maximum brake force in the air brake device of the cars or flatcars.

11. The brake control method of claim 8 or 9,
further comprising:
a computation step for computing the surplus electric brake force or the shortage of electric brake force, being the difference between the electric brake force of the entire composition and the necessary brake force necessary for the motor cars of the train;
wherein the brake force adjustment step:
when there is a surplus electric brake force, distributes that surplus electric brake force in a predetermined order so as to satisfy the necessary brake force of each trailer car pulled by the motor cars or each flatcar of a trailer car; and
when there is a shortage electric brake force, distributes an air brake force corresponding to that shortage electric brake force in a predetermined order so as to satisfy the necessary brake force of the motor cars or flatcars of each.

12. The brake control method of claim 8 or 9,
**characterized in that** the brake force adjustment step distributes the electric brake force or the air brake force to each of the cars or flatcars in a fixed order in the action period of at least one deceleration of the train or from running to stopping.

13. The brake control method of claim 12, **characterized in that** the brake force adjustment step alters at a predetermined period the order of distributing the difference to the air brake force of the train cars or flatcars.

14. The brake control method of claim 8 or 9,
**characterized in that** fluctuations in the air brake force of one car or flatcar compensate so that the total of the air brake force and the electric brake force of the train and the total of the necessary brake force for the train become equal.

## Patentansprüche

1. Bremssteuervorrichtung, die Folgendes aufweist:
- eine Erfassungseinheit (12) für die erforderliche Bremskraft, die dazu ausgebildet ist, eine erforderliche Bremskraft zu erfassen, die für jeden Wagen oder Flachwagen eines Zuges erforderlich ist, der eine Vielzahl von Motorwagen (M) aufweist, die einen primären Elektromotor aufweisen;
- eine elektrische Bremskraft-Detektionseinheit (11), die dazu ausgebildet ist, eine elektrische Bremskraft einer Gesamtzusammensetzung des Zuges zu detektieren, wobei die Gesamtzusammensetzung die Vielzahl der Motorwagen (M) aufweist;
- eine Bremskraft-Einstelleinheit (13), die dazu ausgebildet ist, die Luftbremskraft so zu verteilen, dass Schwankungen der elektrischen Bremskraft mit Luftbremskraft eines der Wagen oder Flachwagen kompensiert wird, und zwar während der Aktionsperiode eines Abbremsens des Zuges oder vom Fahren bis zum Anhalten; und
- eine Steuereinheit (2), die dazu ausgebildet ist, Luftbremskraft von jedem Wagen oder Flachwagen gemäß eines mittels der Bremskraft-Einstelleinheit (13) verteilten Wert zu steuern,
**dadurch gekennzeichnet, dass** die Bremskraft-Einstelleinheit (13) dazu ausgebildet ist, eine Luftbremskraft derart zu verteilen, dass Schwankungen bei der elektrischen Bremskraft durch eine Luftbremsvorrichtung von immer nur einem Wagen oder Flachwagen ausgeglichen werden.

2. Bremssteuervorrichtung gemäß Anspruch 1,
**dadurch gekennzeichnet, dass** die Bremskraft-Einstelleinheit (13) dazu ausgebildet ist, die Luftbremskraft in einer vorbestimmten Reihenfolge derart zu verteilen, dass nacheinander die erforderliche Bremskraft für jeden Wagen oder Flachwagen befriedigt wird, und zwar für die Differenz zwischen der erforderlichen Bremskraft der Gesamtzusammensetzung und der elektrischen Bremskraft, bis diese Differenz beseitigt ist.

3. Bremssteuervorrichtung gemäß Anspruch 1 oder 2,
**dadurch gekennzeichnet, dass** die Bremskraft-Einstelleinheit (13) dazu ausgebildet ist, die Differenz zu der Luftbremskraft der Wagen oder Flachwagen innerhalb eines Bereichs zu verteilen, der nicht geringer ist als die erforderliche Bremskraft, die für jeden Wagen oder Flachwagen des Zuges erforderlich ist, und nicht größer ist als die maximale Bremskraft bei der Luftbremsvorrichtung der Wagen oder Flachwagen.

4. Bremssteuervorrichtung gemäß Anspruch 1 oder 2,
die ferner Folgendes aufweist:
- eine Berechnungseinheit (15) zum Berechnen der überschüssigen elektrischen Bremskraft oder des Mangels an elektrischer Bremskraft, die die Differenz zwischen der elektrischen Bremskraft der Gesamtzusammensetzung und der für die Motorwagen des Zuges erforderliche Bremskraft ist;
- wobei die Bremskraft-Einstelleinheit (13):
wenn eine überschüssige elektrische Bremskraft vorhanden ist, dazu ausgebildet ist, die überschüssige elektrische Bremskraft in einer vorbestimmten Reihenfolge derart zu verteilen, dass die erforderliche Bremskraft für jeden von dem Motorwagen (M) gezogenen Anhängerwagen (T) oder Flachwagen eines Anhängerwagens befriedigt ist; und
- wenn ein Mangel an elektrischer Bremskraft vorhanden ist, dazu ausgebildet ist, eine Luftbremskraft in einer vorbestimmten Reihenfolge zu verteilen, die diesem Mangel an elektrischer Bremskraft entspricht, um die erforderliche Bremskraft der einzelnen Motorwagen oder Flachwagen zu befriedigen.

5. Bremssteuervorrichtung gemäß Anspruch 1 oder 2,
**dadurch gekennzeichnet, dass** die Bremskraft-Einstelleinheit (13) dazu ausgebildet ist, die elektrische Bremskraft oder die Luftbremskraft auf jeden der Wagen oder Flachwagen in einer festen Reihenfolge in der Aktionsperiode von mindestens einem Abbremsen des Zuges oder vom Fahren bis zum Anhalten des Zuges zu verteilen.

6. Bremssteuervorrichtung gemäß Anspruch 5,
**dadurch gekennzeichnet, dass** die Bremskraft-Einstelleinheit (13) dazu ausgebildet ist, die Reihenfolge der Verteilung der Differenz zu der Luftbremskraft der Eisenbahn-Wagen oder Flachwagen in einer vorbestimmten Periode zu ändern.

7. Bremssteuervorrichtung gemäß Anspruch 1 oder 2,
**dadurch gekennzeichnet, dass** Schwankungen bei der Luftbremskraft eines Wagens oder Flachwagens so ausgeglichen werden, dass die Summe der Luftbremskraft und der elektrischen Bremskraft des Zuges und die Summe der für den Zug erforderlichen Bremskraft gleich wird.

8. Verfahren zur Bremssteuerung, das folgende Schritte aufweist:
- einen Erfassungsschritt für die erforderliche Bremskraft (S01) zum Erfassen einer erforderlichen Bremskraft, die für jeden Wagen oder Flachwagen eines Zuges erforderlich ist, der eine Vielzahl von Motorwagen (M) aufweist, die einen primären Elektromotor aufweisen;
- einen elektrischen Bremskraft-Detektionsschritt (S02) zum Detektieren einer elektrischen Bremskraft einer Gesamtzusammensetzung des Zuges, wobei die Gesamtzusammensetzung die Vielzahl der Motorwagen aufweist;
- einen Bremskraft-Einstellschritt zum Verteilen der Luftbremskraft, so dass Schwankungen der elektrischen Bremskraft mit der Luftbremskraft eines der Wagen oder Flachwagen ausgeglichen werden, und zwar in der Aktionsperiode eines Abbremsens des Zuges oder vom Fahren bis zum Anhalten; und
- einen Steuerschritt zum Steuern der Luftbremskraft von jedem Wagen oder Flachwagen, und zwar gemäß einem durch den Bremskraft-Einstellschritt verteilten Wert, **dadurch gekennzeichnet, dass** bei dem Bremskraft-Einstellschritt die Luftbremskraft derart verteilt wird, dass Schwankungen der elektrischen Bremskraft durch eine Luftbremsvorrichtung von nur einem Wagen oder Flachwagen gleichzeitig ausgeglichen werden.

9. Bremssteuerverfahren gemäß Anspruch 8,
**dadurch gekennzeichnet, dass** der Bremskraft-Einstellschritt die Luftbremskraft in einer vorbestimmten Reihenfolge derart verteilt, dass nacheinander die erforderliche Bremskraft für jeden Wagen oder Flachwagen befriedigt wird, und zwar für die Differenz zwischen der erforderlichen Bremskraft für die Gesamtzusammensetzung und der elektrischen Bremskraft, bis die Differenz beseitigt ist.

10. Bremssteuerverfahren gemäß Anspruch 9,
**dadurch gekennzeichnet, dass** der Bremskraft-Einstellschritt die Differenz zur Luftbremskraft der Wagen oder Flachwagen innerhalb eines Bereichs verteilt, der nicht geringer ist als die erforderliche Bremskraft, die für jeden Wagen oder Flachwagen des Zuges erforderlich ist, und nicht größer ist als die maximale Bremskraft bei der Luftbremsvorrichtung der Wagen oder Flachwagen.

11. Bremssteuerverfahren gemäß Anspruch 8 oder 9,
das ferner folgende Schritte aufweist:
- ein Berechnungsschritt zum Berechnen der überschüssigen elektrischen Bremskraft oder des Mangels an elektrischer Bremskraft, der die Differenz zwischen der elektrischen Bremsraft der Gesamtzusammensetzung und der für die Motorwagen des Zuges erforderliche Bremskraft ist;
wobei der Bremskraft-Einstellschritt:
- wenn eine überschüssige elektrische Bremskraft vorhanden ist, die überschüssige elektrische Bremskraft in einer vorbestimmten Reihenfolge so verteilt, dass die erforderliche Bremskraft von jedem von dem Motorwagen gezogenen Anhängerwagen oder jeden Flachwagen eines Anhängerwagens befriedig ist; und
- wenn ein Mangel an elektrischer Bremskraft vorhanden ist, eine dem Mangel an elektrischer Bremskraft entsprechende Luftbremskraft in einer vorbestimmten Reihenfolge verteilt, um die erforderliche Bremskraft der einzelnen Motorwagen oder Flachwagen zu befriedigen.

12. Bremssteuerverfahren gemäß Anspruch 8 oder 9,
**dadurch gekennzeichnet, dass** der Bremskraft-Einstellschritt die elektrische Bremskraft oder die Luftbremskraft auf jeden der Wagen oder Flachwagen in einer festen Reihenfolge verteilt, und zwar in der Aktionsperiode von mindestens einem Abbremsen des Zuges oder vom Fahren bis zum Anhalten.

13. Bremssteuerverfahren gemäß Anspruch 12,
**dadurch gekennzeichnet, dass** der Bremskraft-Einstellschritt die Reihenfolge der Verteilung der Differenz der Luftbremskraft der Zug-Wagen oder Flachwagen in einer vorbestimmten Periode ändert.

14. Bremssteuerverfahren gemäß Anspruch 8 oder 9,
**dadurch gekennzeichnet, dass** Schwankungen bei der Luftbremskraft von einem Wagen oder Flachwagen derart kompensiert werden, dass die Summe der Luftbremskraft und elektrischen Bremskraft des Zuges und die Summe der für den Zug erforderlichen Bremskraft gleich wird.

## Revendications

1. Dispositif de commande de frein, comprenant:
- une unité d'acquisition de force de frein nécessaire (12) adaptée pour acquérir une force de frein nécessaire qui est nécessaire pour chaque wagon ou chaque wagon découvert d'un train contenant une pluralité de wagons à moteur (M) contenant un moteur électrique primaire ;
- une unité de détection de force de freinage électrique (11) adaptée pour détecter une force de freinage électrique d'une entière composition du train, la composition entière incluant la pluralité de wagons à moteur (M) ;
- une unité d'ajustement de force de frein (13) adaptée pour distribuer la force de frein pneumatique de manière à compenser les fluctuations de la force de frein électrique avec la force de frein pneumatique de l'un des wagons ou des wagons découverts, dans la période d'action d'une décélération du train ou depuis le roulement jusqu'à l'arrêt ; et
- une unité de commande (2) adaptée pour commander une force de frein pneumatique de chaque wagon ou chaque wagon découvert en accord avec une valeur distribuée par l'unité d'ajustement de force de frein (13),
**caractérisé en ce que**
l'unité d'ajustement de force de frein (13) est adaptée pour distribuer une force de frein pneumatique d'une manière telle que les fluctuations de la force de frein électrique sont compensées par un dispositif de frein pneumatique d'un seul wagon ou d'un seul wagon découvert à un quelconque instant.

2. Dispositif de commande de frein selon la revendication 1,
**caractérisé en ce que** l'unité d'ajustement de force de frein (13) est adaptée pour distribuer la force de frein pneumatique dans un ordre prédéterminé de manière à successivement satisfaire la force de frein nécessaire pour chaque wagon ou chaque wagon découvert, de la différence entre la force de frein nécessaire de la composition entière et la force de frein électrique, jusqu'à ce que cette différence soit éliminée.

3. Dispositif de commande de frein selon la revendication 1 ou 2,
**caractérisé en ce que** l'unité d'ajustement de force de frein (13) est adaptée pour distribuer la différence à la force de frein pneumatique des wagons ou des wagons découverts dans une plage qui n'est pas inférieure à la force de frein nécessaire qui est nécessaire pour chaque wagon ou chaque wagon découvert sur le train et qui n'est pas supérieure à la force de frein maximum dans un dispositif de frein pneumatique des wagons ou des wagons découverts.

4. Dispositif de commande de frein selon la revendication 1 ou 2,
comprenant en outre:
- une unité de calcul (15) pour calculer le surplus de force de frein électrique ou le manque de force de frein électrique, qui est la différence entre la force de frein électrique de la composition entière et la force de frein nécessaire qui est nécessaire pour les wagons à moteur du train;
dans lequel l'unité d'ajustement de force de frein (13):
- lorsqu'il y a un surplus de force de frein électrique, est adaptée pour distribuer ce surplus de force de frein électrique dans un ordre prédéterminé de manière à satisfaire la force de frein nécessaire pour chaque wagon tracté (T) qui est tiré par les wagons à moteur (M) ou chacun wagon découvert d'un wagon tracté; et
- lorsqu'il y a un manque de force de frein électrique, est adaptée pour distribuer une force de frein pneumatique correspondant à ce manque de force de frein électrique dans un ordre prédéterminé de manière à satisfaire la force de frein nécessaire des wagons à moteur ou des wagons découverts de chacun.

5. Dispositif de commande de frein selon la revendication 1 ou 2,
**caractérisé en ce que** l'unité d'ajustement de force de frein (13) est adaptée pour distribuer la force de frein électrique ou la force de frein pneumatique à chacun des wagons ou des wagons découverts dans un ordre fixé dans la période d'action d'au moins une décélération du train ou depuis le roulement jusqu'à l'arrêt.

6. Dispositif de commande de frein selon la revendication 5,
**caractérisé en ce que** l'unité d'ajustement de force de frein (13) est adaptée pour modifier à une période prédéterminée l'ordre de distribution de la différence à la force de frein pneumatique des wagons ou des wagons découverts du train.

7. Dispositif de commande de frein selon la revendication 1 ou 2,
**caractérisé en ce que** les fluctuations de la force de frein pneumatique d'un wagon ou d'un wagon découvert sont compensées de telle façon que le total de la force de frein pneumatique de la force de frein électrique du train et le total de la force de frein nécessaire pour le train deviennent égaux.

8. Procédé de commande de frein, comprenant les étapes suivantes:
- une étape d'acquisition de force de frein nécessaire (S01) pour acquérir une force de frein nécessaire qui est nécessaire pour chaque wagon ou chaque wagon découvert d'un train contenant une pluralité de wagons à moteur (M) contenant un moteur électrique primaire;
- une étape de détection de force de frein électrique (S02) pour détecter une force de frein électrique d'une composition entière du train, la composition entière incluant la pluralité de wagons à moteur;
- une étape d'ajustement de force de frein pour distribuer une force de frein pneumatique de manière à compenser les fluctuations de la force de frein électrique avec la force de frein pneumatique de l'un des wagons ou des wagons découverts, dans la période d'action d'une décélération du train ou depuis le roulement jusqu'à l'arrêt; et
- une étape de commande destinée à commander la force de frein pneumatique de chaque wagon ou de chaque wagon découvert en accord avec une valeur distribuée par l'étape d'ajustement de force de frein,
**caractérisé en ce que**
dans l'étape d'ajustement de force de frein, la force de frein pneumatique est distribuée d'une manière telle que les fluctuations de la force de frein électrique sont compensées par un dispositif de frein pneumatique d'un seul wagon ou d'un seul wagon découvert à un quelconque instant.

9. Procédé de commande de frein selon la revendication 8,
**caractérisé en ce que** l'étape d'ajustement de force de frein distribue la force de frein pneumatique dans un ordre prédéterminé de manière à successivement satisfaire la force de frein nécessaire pour chaque wagon ou chaque wagon découvert, de la différence entre la force de frein nécessaire de la composition entière et la force de frein électrique, jusqu'à ce que cette différence soit éliminée.

10. Procédé de commande de frein selon la revendication 9,
**caractérisé en ce que** l'étape d'ajustement de force de frein distribue la différence à la force de frein pneumatique des wagons ou des wagons découverts à l'Intérieur d'une plage qui n'est pas inférieure à la force de frein nécessaire qui est nécessaire pour chaque wagon ou chaque wagon découvert sur le train et qui n'est pas supérieure à la force de frein maximum dans le dispositif de frein pneumatique des wagons ou des wagons découverts.

11. Procédé de commande de frein selon la revendication 8 ou 9,
comprenant en outre:
- une étape de calcul pour calculer le surplus de force de frein électrique ou le manque de force de frein électrique, qui est la différence entre la force de frein électrique de la composition entière et la force de frein nécessaire qui est nécessaire pour les wagons à moteur du train ;
dans lequel l'étape d'ajustement de force de frein :
- lorsqu'il y a un surplus de force de frein électrique, distribue ce surplus de force de frein électrique dans un ordre prédéterminé de manière à satisfaire la force de frein nécessaire de chacun wagon tracté qui est tiré par les wagons à moteur ou chaque wagon découvert d'un wagon tracté ; et
- lorsqu'il y a un manque de force de frein électrique, distribue une force de frein pneumatique correspondant à ce manque de force de frein électrique dans un ordre prédéterminé de manière à satisfaire la force de frein nécessaire des wagons à moteur ou des wagons découverts de chacun.

12. Procédé de commande de frein selon la revendication 8 ou 9,
**caractérisé en ce que** l'étape d'ajustement de force de frein distribue la force de frein électrique ou la force de frein pneumatique à chacun des wagons ou des wagons découverts dans un ordre fixé dans la période d'action d'au moins une décélération du train ou depuis le roulement jusqu'à l'arrêt.

13. Procédé de commande de frein selon la revendication 12,
**caractérisé en ce que** l'étape d'ajustement de force de frein modifie à une période prédéterminée l'ordre de distribution de la différence à la force de frein pneumatique des wagons ou des wagons découverts du train.

14. Procédé de commande de frein selon la revendication 8 ou 9,
**caractérisé en ce que** les fluctuations de la force de frein pneumatique d'un wagon ou d'un wagon découvert sont compensées de telle façon que le total de la force de frein pneumatique et de la force de frein électrique du train et le total de la force de frein nécessaire pour le train deviennent égaux.
